(19) Europäisches Patentamt
European Patent Office
Office européen des brevets

(11) **EP 4 380 155 A1**

(12) **EUROPEAN PATENT APPLICATION**
published in accordance with Art. 153(4) EPC

(43) Date of publication:
**05.06.2024 Bulletin 2024/23**

(21) Application number: **22863211.3**

(22) Date of filing: **22.08.2022**

(51) International Patent Classification (IPC):
**H04N 19/30** $^{(2014.01)}$    **H04N 19/36** $^{(2014.01)}$

(52) Cooperative Patent Classification (CPC):
**H04N 19/30; H04N 19/36**

(86) International application number:
**PCT/CN2022/113984**

(87) International publication number:
**WO 2023/030072 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.08.2021 CN 202111003279**

(71) Applicant: **Huawei Technologies Co., Ltd.
Shenzhen, Guangdong 518129 (CN)**

(72) Inventors:
• **SONG, Yi
Shenzhen, Guangdong 518129 (CN)**
• **ZHANG, Yixuan
Shenzhen, Guangdong 518129 (CN)**
• **DI, Peiyun
Shenzhen, Guangdong 518129 (CN)**
• **CHEN, Shaolin
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **ENCODING AND DECODING METHOD, ENCODER, DECODER, AND ELECTRONIC DEVICE**

(57)    Embodiments of this application provide an encoding method, a decoding method, an encoder, a decoder, and an electronic device. The encoding method includes: obtaining a to-be-encoded picture; and after $i^{th}$-layer encoding is performed on the picture, performing adaptive scalable encoding on the picture based on source information of the picture and/or encoding information of an $i^{th}$ layer. In this way, flexible scalable encoding can be performed on each picture, and when the to-be-encoded picture changes, layer redundancy caused by excessive layers can be avoided, to improve encoding efficiency and transmission efficiency. In addition, that a transmittable intermediate layer with high picture quality cannot be obtained due to too few layers can be avoided, to improve video picture quality.

FIG. 3a

## Description

This application claims priority to Chinese Patent Application No. 202111003279.5, filed with the China National Intellectual Property Administration on August 30, 2021 and entitled "ENCODING METHOD, DECODING METHOD, ENCODER, DECODER, AND ELECTRONIC DEVICE", which is incorporated herein by reference in its entirety.

## TECHNICAL FIELD

Embodiments of this application relate to the field of encoding and decoding, and in particular, to an encoding method, a decoding method, an encoder, a decoder, and an electronic device.

## BACKGROUND

Currently, scalable video coding is widely applied to a scene with a high requirement for an end-to-end delay, to improve playing smoothness of a video.

In an actual application scenario, network fluctuation is normal, and video pictures of different video services are different. This causes changes in picture quality of an encoded picture, a bit rate, and picture quality of a decoded picture. If current scalable video coding is used to perform scalable coding on a picture, because a layer structure of the scalable coding is fixed, when a network fluctuates and a to-be-coded video picture changes, there may be excessive layers, and layer redundancy is caused, resulting in a low coding compression rate and low transmission efficiency. In addition, there may alternatively be too few layers, and a transmittable intermediate layer with high picture quality cannot be obtained, resulting in reduced video picture quality.

## SUMMARY

To resolve the foregoing technical problem, this application provides an encoding method, a decoding method, an encoder, a decoder, and an electronic device. According to the encoding method, flexible scalable encoding can be performed on each picture, to improve a coding compression rate and transmission efficiency, and improve video picture quality.

According to a first aspect, an embodiment of this application provides an encoding method. The method includes: obtaining a to-be-encoded picture; and after $i^{th}$-layer encoding is performed on the picture, performing adaptive scalable encoding on the picture based on source information of the picture and/or encoding information of an $i^{th}$ layer. In this way, flexible scalable encoding can be performed on each picture in a manner of adapting to information carried in the picture and/or encoding information of the picture, and when the to-be-encoded picture changes, layer redundancy caused by excessive layers can be avoided, to improve encoding efficiency and transmission efficiency. In addition, that a transmittable intermediate layer with high picture quality cannot be obtained due to too few layers can be avoided, to improve video picture quality.

For example, adaptive scalable encoding means whether to perform further scalable encoding on the to-be-encoded picture.

For example, i is a positive integer, and the $i^{th}$ layer is a base layer or an enhancement layer.

For example, the to-be-encoded picture may be a frame of a complete picture, may be a picture block obtained by dividing a picture into blocks, or may be a local area with rich texture information, a local area interested in by a user, another key area, or the like.

According to the first aspect, the performing adaptive scalable encoding on the picture based on source information of the picture includes: when the source information meets a first preset condition, performing $(i+1)^{th}$-layer encoding on the picture.

For example, when the source information does not meet the first preset condition, encoding of the picture is ended.

For example, ending encoding of the picture means that next-layer encoding is no longer performed on the picture, that is, ending encoding of a current frame instead of ending encoding of all frames. In this application, ending encoding of the current frame refers to determining not to perform $(i+1)^{th}$-layer encoding on the current frame instead of immediately stopping an encoding operation that may be being performed by an encoder on the $i^{th}$ layer and a lower layer of the current frame.

According to any one of the first aspect or the implementations of the first aspect, the performing adaptive scalable encoding on the picture based on encoding information of an $i^{th}$ layer includes: when the encoding information of the $i^{th}$ layer meets a second preset condition, performing $(i+1)^{th}$-layer encoding on the picture.

For example, when the encoding information of the $i^{th}$ layer does not meet the second preset condition, encoding of the picture is ended.

According to any one of the first aspect or the implementations of the first aspect, the performing adaptive scalable encoding on the picture based on source information of the picture and/or encoding information of an $i^{th}$ layer includes: when the source information does not meet a first preset condition, and the encoding information of the $i^{th}$ layer does not meet a second preset condition, ending encoding of the picture.

For example, the performing adaptive scalable encoding on the picture based on source information of the picture and/or encoding information of an $i^{th}$ layer includes: when the source information meets a first preset condition, and the encoding information of the $i^{th}$ layer does not meet a second preset condition, ending encoding of the picture.

For example, the performing adaptive scalable encoding on the picture based on source information of the picture and/or encoding information of an $i^{th}$ layer includes: when the source information does not meet a first preset condition, and the encoding information of the $i^{th}$ layer meets a second preset condition, ending encoding of the picture.

According to any one of the first aspect or the implementations of the first aspect, the first preset condition includes at least one of the following:

spatial complexity is greater than a first complexity threshold corresponding to the $i^{th}$ layer;
temporal complexity is greater than a second complexity threshold corresponding to the $i^{th}$ layer; and
temporal-spatial complexity is greater than a third complexity threshold corresponding to the $i^{th}$ layer.

In this way, when complexity of a picture is high, a number of coding layers can be appropriately increased, to obtain a transmittable intermediate layer with high picture quality, and improve video picture quality. In addition, when the complexity of the picture is low, the number of coding layers can be appropriately reduced, to reduce a redundant layer, and improve coding compression efficiency and transmission efficiency.

According to any one of the first aspect or the implementations of the first aspect, when i is greater than 1,

the first complexity threshold corresponding to the $i^{th}$ layer is greater than a first complexity threshold corresponding to a $(i-1)^{th}$ layer;
the second complexity threshold corresponding to the $i^{th}$ layer is greater than a second complexity threshold corresponding to the $(i-1)^{th}$ layer; and
the third complexity threshold corresponding to the $i^{th}$ layer is greater than a third complexity threshold corresponding to the $(i-1)^{th}$ layer.

According to any one of the first aspect or the implementations of the first aspect, the second preset condition includes at least one of the following:

residual information of a reconstructed picture of the $i^{th}$ layer is greater than a residual threshold;
a peak signal-to-noise ratio of the reconstructed picture of the $i^{th}$ layer is less than a signal-to-noise ratio threshold;
an encoding quantization parameter value of the $i^{th}$ layer is greater than a quantization threshold;
a rate-distortion optimization parameter value of the $i^{th}$ layer is greater than a distortion threshold; and
a subjective quality estimate of the reconstructed picture of the $i^{th}$ layer is less than a subjective quality threshold.

In this way, when quality of an encoded picture is poor, a number of coding layers can be appropriately increased, to obtain a transmittable intermediate layer with high picture quality, and improve video picture quality. In addition, when the quality of the encoded picture is good, the number of coding layers can be appropriately reduced, to reduce a redundant layer, and improve coding compression efficiency and transmission efficiency.

According to any one of the first aspect or the implementations of the first aspect, a bitstream obtained by performing $i^{th}$-layer encoding on the picture includes an encoding status identifier, and the encoding status identifier indicates whether a bitstream of the $i^{th}$ layer is a bitstream obtained by performing last-layer encoding on the picture. In this way, it is convenient for a decoder side to determine whether a to-be-decoded bitstream is a bitstream obtained by performing last-layer encoding on a corresponding picture, to facilitate display decision-making.

According to any one of the first aspect or the implementations of the first aspect, the method further includes: after $i^{th}$-layer encoding is performed on the picture, determining, based on a preset maximum number of layers L_MAX, whether to end encoding of the picture.

According to any one of the first aspect or the implementations of the first aspect, the encoding information includes at least one of the following: residual information of a residual picture, a peak signal-to-noise ratio of a reconstructed picture, an encoding quantization parameter value, a rate-distortion optimization parameter value, and a subjective quality estimate of the reconstructed picture.

According to any one of the first aspect or the implementations of the first aspect, the source information includes at least one of the following: spatial complexity, temporal complexity, and temporal-spatial complexity.

According to a second aspect, an embodiment of this application provides a decoding method. The method includes: obtaining a to-be-decoded bitstream, where the bitstream includes an encoding status identifier; parsing the bitstream, obtaining the encoding status identifier from the parsed bitstream, and reconstructing a picture based on the parsed bitstream to obtain a reconstructed picture; and if the encoding status identifier is a first preset identifier, storing the reconstructed picture in a display buffer; or if the encoding status identifier is a second preset identifier, outputting the reconstructed picture to a display module. In this way, a decoder side can determine, based on the encoding status identifier of the bitstream, whether the bitstream is a bitstream obtained by performing last-layer encoding on a picture corresponding to the bitstream, and further determine whether to send the reconstructed picture to the display module for display or store the reconstructed picture.

According to the second aspect, the first preset identifier indicates that the bitstream is not the bitstream obtained by performing last-layer encoding on the picture corresponding to the bitstream, and the second preset identifier indicates that the bitstream is the bitstream obtained by performing last-layer encoding on the picture corresponding to the bitstream.

According to a third aspect, an embodiment of this application provides an encoding method. The method includes: obtaining a to-be-encoded picture; determining a number of coding layers L1 of the picture based on channel feedback information; and performing scalable encoding on the picture based on the number of coding layers L1. In this way, flexible scalable encoding can be performed on each picture in a manner of adapting to a network fluctuation situation, and when a network fluctuates, layer redundancy caused by excessive layers is avoided, to improve encoding efficiency and transmission efficiency. In addition, that a transmittable intermediate layer with high picture quality cannot be obtained due to too few layers can be avoided, to improve video picture quality.

For example, L1 is a positive integer.

According to the third aspect, the determining a number of coding layers L1 of the picture based on channel feedback information includes: when the channel feedback information meets a third preset condition, selecting L1 from a number of coding layers L2 of a historical frame to a preset maximum number of layers L_MAX; or when the channel feedback information does not meet a third preset condition, selecting L1 from 1 to a number of coding layers L2 of a historical frame.

For example, the historical frame may be any frame before a current frame, or may be any frame before a current frame in a picture group to which the current frame belongs.

According to any one of the third aspect or the implementations of the third aspect, the third preset condition includes at least one of the following:

a difference between a current network transmission bandwidth estimate and a historical network transmission bandwidth estimate is greater than a bandwidth difference threshold;
a difference between a current network transmission throughput estimate and a historical network transmission throughput estimate is greater than a throughput threshold;
a difference between a current blocked data amount estimate and a historical blocked data amount estimate is greater than a data block threshold;
a difference between a current packet loss rate estimate and a historical packet loss rate estimate is greater than a packet loss rate threshold;
a difference between a current sending delay duration estimate and a historical sending delay duration estimate is greater than a delay threshold; and
a difference between a current display frame rate estimate and a historical display frame rate estimate is greater than a display frame rate threshold.

In this way, a network fluctuation situation can be accurately determined based on historical channel feedback information and current channel feedback information. Further, when a network fluctuation is large, a number of coding layers can be appropriately increased, to obtain a transmittable intermediate layer with high picture quality, and improve video picture quality. In addition, when the network fluctuation is small, the number of coding layers can be appropriately reduced, to reduce a redundant layer, and improve coding compression efficiency and transmission efficiency.

According to any one of the third aspect or the implementations of the third aspect, the third preset condition includes at least one of the following:

a current network transmission bandwidth estimate is greater than a bandwidth variance threshold;
a historical network transmission bandwidth estimate is greater than the bandwidth variance threshold;
a current network transmission throughput estimate is greater than a throughput variance threshold;
a historical network transmission throughput estimate is greater than the throughput variance threshold;
a current blocked data amount estimate is greater than a data block variance threshold;
a historical blocked data amount estimate is greater than the data block variance threshold;
a current packet loss rate estimate is greater than a packet loss rate variance threshold;
a historical packet loss rate estimate is greater than the packet loss rate variance threshold;

a current sending delay duration estimate is greater than a delay variance threshold;

a historical sending delay duration estimate is greater than the delay variance threshold;

a current display frame rate estimate is greater than a display frame rate variance threshold; and

a historical display frame rate estimate is greater than the display frame rate variance threshold.

In this way, a network fluctuation situation can be accurately determined based on historical channel feedback information and current channel feedback information. Further, when a network fluctuation is large, a number of coding layers can be appropriately increased, to obtain a transmittable intermediate layer with high picture quality, and improve video picture quality. In addition, when the network fluctuation is small, the number of coding layers can be appropriately reduced, to reduce a redundant layer, and improve coding compression efficiency and transmission efficiency.

According to any one of the third aspect or the implementations of the third aspect, the performing scalable encoding on the picture based on the number of coding layers L1 includes:

after $i^{th}$-layer encoding is performed on the picture, when i is less than the number of coding layers L1, performing adaptive scalable encoding on the picture based on source information of the picture and/or encoding information of an $i^{th}$ layer, where i is a positive integer, and the $i^{th}$ layer is a base layer or an enhancement layer; or when i is equal to the number of coding layers L1, ending encoding of the picture.

In this way, flexible scalable encoding can be performed on each picture in a manner of adapting to a network fluctuation situation, and information carried in the picture and/or encoding information of the picture, and when a network fluctuates or a to-be-encoded picture changes, layer redundancy caused by excessive layers is avoided, to improve encoding efficiency and transmission efficiency. In addition, that a transmittable intermediate layer with high picture quality cannot be obtained due to too few layers can be avoided, to improve video picture quality.

According to any one of the third aspect or the implementations of the third aspect, the channel feedback information includes at least one of the following: a network transmission bandwidth estimate, a network transmission throughput estimate, a blocked data amount estimate, a packet loss rate estimate, a sending delay duration estimate, and a display frame rate estimate.

According to any one of the third aspect or the implementations of the third aspect, the method further includes: A bitstream of the picture includes the number of coding layers L1 of the picture. In this way, it is convenient for a decoder side to determine whether a decoded bitstream is a bitstream obtained by performing last-layer encoding on a picture, to facilitate display decision-making.

According to a fourth aspect, an embodiment of this application provides a decoding method. The method includes: obtaining a to-be-decoded bitstream, where the bitstream includes a layer identifier; parsing the bitstream, obtaining the layer identifier from the parsed bitstream, and reconstructing a picture based on the parsed bitstream to obtain a reconstructed picture; and when it is determined, based on the layer identifier, that the bitstream is a bitstream obtained by performing last-layer encoding on a picture corresponding to the bitstream, outputting the reconstructed picture to a display module; or when it is determined, based on the layer identifier, that the bitstream is not a bitstream obtained by performing last-layer encoding on a picture corresponding to the bitstream, storing the reconstructed picture in a display buffer. In this way, a decoder side can determine, based on the layer identifier of the bitstream, whether the bitstream is the bitstream obtained by performing last-layer encoding on the picture corresponding to the bitstream, and further determine whether to send the reconstructed picture to the display module for display or store the reconstructed picture.

According to a fifth aspect, an embodiment of this application further provides an encoding method. The method includes: obtaining a to-be-encoded picture; and then performing adaptive scalable encoding on the picture based on source information of the picture.

The fifth aspect and any implementation of the fifth aspect respectively correspond to the first aspect and any implementation of the first aspect. For technical effects corresponding to the fifth aspect and any implementation of the fifth aspect, refer to the technical effects corresponding to the first aspect and any implementation of the first aspect. Details are not described herein again.

According to a sixth aspect, an embodiment of this application further provides an encoding method. The method includes: obtaining a to-be-encoded picture; and after $i^{th}$-layer encoding is performed on the picture, performing adaptive scalable encoding on the picture based on encoding information of an $i^{th}$ layer.

The sixth aspect and any implementation of the sixth aspect respectively correspond to the first aspect and any implementation of the first aspect. For technical effects corresponding to the sixth aspect and any implementation of the sixth aspect, refer to the technical effects corresponding to the first aspect and any implementation of the first aspect. Details are not described herein again.

According to a seventh aspect, an embodiment of this application provides an encoder. The encoder is configured to: obtain a to-be-encoded picture; and after $i^{th}$-layer encoding is performed on the picture, perform adaptive scalable encoding on the picture based on source information of the picture and/or encoding information of an $i^{th}$ layer, where i is a positive integer, and the $i^{th}$ layer is a base layer or an enhancement layer.

According to the seventh aspect, the encoder is configured to: when the source information meets a first preset condition, perform $(i+1)^{th}$-layer encoding on the picture.

According to any one of the seventh aspect or the implementations of the seventh aspect, the encoder is configured to: when the encoding information of the $i^{th}$ layer meets a second preset condition, perform $(i+1)^{th}$-layer encoding on the picture.

According to any one of the seventh aspect or the implementations of the seventh aspect, the encoder is configured to: when the source information does not meet a first preset condition, and the encoding information of the $i^{th}$ layer does not meet a second preset condition, end encoding of the picture.

According to any one of the seventh aspect or the implementations of the seventh aspect, the first preset condition includes at least one of the following:

spatial complexity information is greater than a first complexity threshold corresponding to the $i^{th}$ layer;
temporal complexity information is greater than a second complexity threshold corresponding to the $i^{th}$ layer; and
temporal-spatial complexity information is greater than a third complexity threshold corresponding to the $i^{th}$ layer.

According to any one of the seventh aspect or the implementations of the seventh aspect, the second preset condition includes at least one of the following:

residual information of a reconstructed picture of the $i^{th}$ layer is greater than a residual threshold;
a peak signal-to-noise ratio of the reconstructed picture of the $i^{th}$ layer is less than a signal-to-noise ratio threshold;
an encoding quantization parameter value of the $i^{th}$ layer is greater than a quantization threshold;
a rate-distortion optimization parameter value of the $i^{th}$ layer is greater than a distortion threshold; and
a subjective quality estimate of the reconstructed picture of the $i^{th}$ layer is less than a subjective quality threshold.

According to any one of the seventh aspect or the implementations of the seventh aspect, a bitstream obtained by performing $i^{th}$-layer encoding on the picture includes an encoding status identifier, and the encoding status identifier indicates whether a bitstream of the $i^{th}$ layer is a bitstream obtained by performing last-layer encoding on the picture.

According to any one of the seventh aspect or the implementations of the seventh aspect, the encoder is configured to: after $i^{th}$-layer encoding is performed on the picture, determine, based on a preset maximum number of layers L_MAX, whether to end encoding of the picture.

According to any one of the seventh aspect or the implementations of the seventh aspect, the encoding information includes at least one of the following: residual information of a residual picture, a peak signal-to-noise ratio of a reconstructed picture, an encoding quantization parameter value, a rate-distortion optimization parameter value, and a subjective quality estimate of the reconstructed picture.

According to any one of the seventh aspect or the implementations of the seventh aspect, the source information includes at least one of the following: spatial complexity, temporal complexity, and temporal-spatial complexity.

The seventh aspect and any implementation of the seventh aspect respectively correspond to the first aspect and any implementation of the first aspect. For technical effects corresponding to the seventh aspect and any implementation of the seventh aspect, refer to the technical effects corresponding to the first aspect and any implementation of the first aspect. Details are not described herein again.

According to an eighth aspect, an embodiment of this application further provides a decoder. The decoder is configured to: obtain a to-be-decoded bitstream, where the bitstream includes an encoding status identifier; parse the bitstream, obtain the encoding status identifier from the parsed bitstream, and reconstruct a picture based on the parsed bitstream to obtain a reconstructed picture; and if the encoding status identifier is a first preset identifier, store the reconstructed picture in a display buffer; or if the encoding status identifier is a second preset identifier, output the reconstructed picture to a display module.

According to the eighth aspect, the first preset identifier indicates that the bitstream is not a bitstream obtained by performing last-layer encoding on a picture corresponding to the bitstream, and the second preset identifier indicates that the bitstream is the bitstream obtained by performing last-layer encoding on the picture corresponding to the bitstream.

The eighth aspect and any implementation of the eighth aspect respectively correspond to the second aspect and any implementation of the second aspect. For technical effects corresponding to the eighth aspect and any implementation of the eighth aspect, refer to the technical effects corresponding to the second aspect and any implementation of the second aspect. Details are not described herein again.

According to a ninth aspect, an embodiment of this application further provides an encoder. The encoder is configured to: obtain a to-be-encoded picture; determine a number of coding layers L1 of the picture based on channel feedback information, where L1 is a positive integer; and perform scalable encoding on the picture based on the number of coding layers L1.

According to the ninth aspect, the encoder is configured to: when the channel feedback information meets a third preset condition, select L1 from a number of coding layers L2 of a historical frame to a preset maximum number of layers L_MAX; or when the channel feedback information does not meet a third preset condition, select L1 from 1 to a number of coding layers L2 of a historical frame.

According to any one of the ninth aspect or the implementations of the ninth aspect, the third preset condition includes at least one of the following:

a difference between a current network transmission bandwidth estimate and a historical network transmission bandwidth estimate is greater than a bandwidth difference threshold;

a difference between a current network transmission throughput estimate and a historical network transmission throughput estimate is greater than a throughput threshold;

a difference between a current blocked data amount estimate and a historical blocked data amount estimate is greater than a data block threshold;

a difference between a current packet loss rate estimate and a historical packet loss rate estimate is greater than a packet loss rate threshold;

a difference between a current sending delay duration estimate and a historical sending delay duration estimate is greater than a delay threshold; and

a difference between a current display frame rate estimate and a historical display frame rate estimate is greater than a display frame rate threshold.

According to any one of the ninth aspect or the implementations of the ninth aspect, the encoder is configured to: after $i^{th}$-layer encoding is performed on the picture, when i is less than the number of coding layers L1, perform adaptive scalable encoding on the picture based on source information of the picture and/or encoding information of an $i^{th}$ layer, where i is a positive integer, and the $i^{th}$ layer is a base layer or an enhancement layer; or when i is equal to the number of coding layers L1, end encoding of the picture.

According to any one of the ninth aspect or the implementations of the ninth aspect, the channel feedback information includes at least one of the following: a network transmission bandwidth estimate, a network transmission throughput estimate, a blocked data amount estimate, a packet loss rate estimate, a sending delay duration estimate, and a display frame rate estimate.

According to any one of the ninth aspect or the implementations of the ninth aspect, a bitstream of the picture includes the number of coding layers L1 of the picture.

The ninth aspect and any implementation of the ninth aspect respectively correspond to the third aspect and any implementation of the third aspect. For technical effects corresponding to the ninth aspect and any implementation of the ninth aspect, refer to the technical effects corresponding to the third aspect and any implementation of the third aspect. Details are not described herein again.

According to a tenth aspect, an embodiment of this application provides a decoder. The decoder is configured to: obtain a to-be-decoded bitstream, where the bitstream includes a layer identifier; parse the bitstream, obtain the layer identifier from the parsed bitstream, and reconstruct a picture based on the parsed bitstream to obtain a reconstructed picture; and when it is determined, based on the layer identifier, that the bitstream is a bitstream obtained by performing last-layer encoding on a picture corresponding to the bitstream, output the reconstructed picture to a display module; or when it is determined, based on the layer identifier, that the bitstream is not a bitstream obtained by performing last-layer encoding on a picture corresponding to the bitstream, store the reconstructed picture in a display buffer.

The tenth aspect and any implementation of the tenth aspect respectively correspond to the fourth aspect and any implementation of the fourth aspect. For technical effects corresponding to the tenth aspect and any implementation of the tenth aspect, refer to the technical effects corresponding to the fourth aspect and any implementation of the fourth aspect. Details are not described herein again.

According to an eleventh aspect, an embodiment of this application provides an electronic device, including the encoder according to the seventh aspect and/or the decoder according to the eighth aspect.

The eleventh aspect and any implementation of the eleventh aspect respectively correspond to the first aspect and any implementation of the first aspect, and/or correspond to the second aspect and any implementation of the second aspect. For technical effects corresponding to the eleventh aspect and any implementation of the eleventh aspect, refer to the technical effects corresponding to the first aspect and any implementation of the first aspect, and/or refer to the technical effects corresponding to the second aspect and any implementation of the second aspect. Details are not described herein again.

According to a twelfth aspect, an embodiment of this application provides an electronic device, including the encoder according to the ninth aspect and/or the decoder according to the tenth aspect.

The twelfth aspect and any implementation of the twelfth aspect respectively correspond to the third aspect and any implementation of the third aspect, and/or correspond to the fourth aspect and any implementation of the fourth aspect. For technical effects corresponding to the twelfth aspect and any implementation of the twelfth aspect, refer to the technical effects corresponding to the third aspect and any implementation of the third aspect, and/or refer to the technical effects corresponding to the fourth aspect and any implementation of the fourth aspect. Details are not described herein again.

According to a thirteenth aspect, an embodiment of this application provides an electronic device, including a memory and a processor. The memory is coupled to the processor; and the memory stores program instructions. When the program instructions are executed by the processor, the electronic device is enabled to perform the encoding method according to any one of the first aspect or the possible implementations of the first aspect.

The thirteenth aspect and any implementation of the thirteenth aspect respectively correspond to the first aspect and any implementation of the first aspect. For technical effects corresponding to the thirteenth aspect and any implementation of the thirteenth aspect, refer to the technical effects corresponding to the first aspect and any implementation of the first aspect. Details are not described herein again.

According to a fourteenth aspect, an embodiment of this application provides an electronic device, including a memory and a processor. The memory is coupled to the processor; and the memory stores program instructions. When the program instructions are executed by the processor, the electronic device is enabled to perform the decoding method according to any one of the second aspect or the possible implementations of the second aspect.

The fourteenth aspect and any implementation of the fourteenth aspect respectively correspond to the second aspect and any implementation of the second aspect. For technical effects corresponding to the fourteenth aspect and any implementation of the fourteenth aspect, refer to the technical effects corresponding to the second aspect and any implementation of the second aspect. Details are not described herein again.

According to a fifteenth aspect, an embodiment of this application provides an electronic device, including a memory and a processor. The memory is coupled to the processor; and the memory stores program instructions. When the program instructions are executed by the processor, the electronic device is enabled to perform the encoding method according to any one of the third aspect or the possible implementations of the third aspect.

The fifteenth aspect and any implementation of the fifteenth aspect respectively correspond to the third aspect and any implementation of the third aspect. For technical effects corresponding to the fifteenth aspect and any implementation of the fifteenth aspect, refer to the technical effects corresponding to the third aspect and any implementation of the third aspect. Details are not described herein again.

According to a sixteenth aspect, an embodiment of this application provides an electronic device, including a memory and a processor. The memory is coupled to the processor; and the memory stores program instructions. When the program instructions are executed by the processor, the electronic device is enabled to perform the decoding method according to any one of the fourth aspect or the possible implementations of the fourth aspect.

The sixteenth aspect and any implementation of the sixteenth aspect respectively correspond to the fourth aspect and any implementation of the fourth aspect. For technical effects corresponding to the sixteenth aspect and any implementation of the sixteenth aspect, refer to the technical effects corresponding to the fourth aspect and any implementation of the fourth aspect. Details are not described herein again.

According to a seventeenth aspect, an embodiment of this application provides a chip, including one or more interface circuits and one or more processors. The interface circuit is configured to receive a signal from a memory of an electronic device, and send the signal to the processor, where the signal includes computer instructions stored in the memory. When the processor executes the computer instructions, the electronic device performs the encoding method according to any one of the first aspect or the possible implementations of the first aspect.

The seventeenth aspect and any implementation of the seventeenth aspect respectively correspond to the first aspect and any implementation of the first aspect. For technical effects corresponding to the seventeenth aspect and any implementation of the seventeenth aspect, refer to the technical effects corresponding to the first aspect and any implementation of the first aspect. Details are not described herein again.

According to an eighteenth aspect, an embodiment of this application provides a chip, including one or more interface circuits and one or more processors. The interface circuit is configured to receive a signal from a memory of an electronic device, and send the signal to the processor, where the signal includes computer instructions stored in the memory. When the processor executes the computer instructions, the electronic device performs the decoding method according to any one of the second aspect or the possible implementations of the second aspect.

The eighteenth aspect and any implementation of the eighteenth aspect respectively correspond to the second aspect and any implementation of the second aspect. For technical effects corresponding to the eighteenth aspect and any implementation of the eighteenth aspect, refer to the technical effects corresponding to the second aspect and any implementation of the second aspect. Details are not described herein again.

According to a nineteenth aspect, an embodiment of this application provides a chip, including one or more interface circuits and one or more processors. The interface circuit is configured to receive a signal from a memory of an electronic device, and send the signal to the processor, where the signal includes computer instructions stored in the memory. When the processor executes the computer instructions, the electronic device performs the encoding method according to any one of the third aspect or the possible implementations of the third aspect.

The nineteenth aspect and any implementation of the nineteenth aspect respectively correspond to the third aspect and any implementation of the third aspect. For technical effects corresponding to the nineteenth aspect and any implementation of the nineteenth aspect, refer to the technical effects corresponding to the third aspect and any implementation of the third aspect. Details are not described herein again.

According to a twentieth aspect, an embodiment of this application provides a chip, including one or more interface circuits and one or more processors. The interface circuit is configured to receive a signal from a memory of an electronic device, and send the signal to the processor, where the signal includes computer instructions stored in the memory. When the processor executes the computer instructions, the electronic device performs the decoding method according to any one of the fourth aspect or the possible implementations of the fourth aspect.

The twentieth aspect and any implementation of the twentieth aspect respectively correspond to the fourth aspect and any implementation of the fourth aspect. For technical effects corresponding to the twentieth aspect and any implementation of the twentieth aspect, refer to the technical effects corresponding to the fourth aspect and any implementation of the fourth aspect. Details are not described herein again.

According to a twenty-first aspect, an embodiment of this application provides a computer storage medium. The computer-readable storage medium stores a computer program. When the computer program is run on a computer or a processor, the computer or the processor is enabled to perform the encoding method according to any one of the first aspect or the possible implementations of the first aspect.

The twenty-first aspect and any implementation of the twenty-first aspect respectively correspond to the first aspect and any implementation of the first aspect. For technical effects corresponding to the twenty-first aspect and any implementation of the twenty-first aspect, refer to the technical effects corresponding to the first aspect and any implementation of the first aspect. Details are not described herein again.

According to a twenty-second aspect, an embodiment of this application provides a computer storage medium. The computer-readable storage medium stores a computer program. When the computer program is run on a computer or a processor, an electronic device is enabled to perform the decoding method according to any one of the second aspect or the possible implementations of the second aspect.

The twenty-second aspect and any implementation of the twenty-second aspect respectively correspond to the second aspect and any implementation of the second aspect. For technical effects corresponding to the twenty-second aspect and any implementation of the twenty-second aspect, refer to the technical effects corresponding to the second aspect and any implementation of the second aspect. Details are not described herein again.

According to a twenty-third aspect, an embodiment of this application provides a computer storage medium. The computer-readable storage medium stores a computer program. When the computer program is run on a computer or a processor, an electronic device is enabled to perform the encoding method according to any one of the third aspect or the possible implementations of the third aspect.

The twenty-third aspect and any implementation of the twenty-third aspect respectively correspond to the third aspect and any implementation of the third aspect. For technical effects corresponding to the twenty-third aspect and any implementation of the twenty-third aspect, refer to the technical effects corresponding to the third aspect and any implementation of the third aspect. Details are not described herein again.

According to a twenty-fourth aspect, an embodiment of this application provides a computer storage medium. The computer-readable storage medium stores a computer program. When the computer program is run on a computer or a processor, an electronic device is enabled to perform the decoding method according to any one of the fourth aspect or the possible implementations of the fourth aspect.

The twenty-fourth aspect and any implementation of the twenty-fourth aspect respectively correspond to the fourth aspect and any implementation of the fourth aspect. For technical effects corresponding to the twenty-fourth aspect and any implementation of the twenty-fourth aspect, refer to the technical effects corresponding to the fourth aspect and any implementation of the fourth aspect. Details are not described herein again.

According to a twenty-fifth aspect, an embodiment of this application provides a computer program product. The computer program product includes a software program, and when the software program is executed by a computer or a processor, the computer or the processor is enabled to perform the encoding method according to any one of the first aspect or the possible implementations of the first aspect.

The twenty-fifth aspect and any implementation of the twenty-fifth aspect respectively correspond to the first aspect and any implementation of the first aspect. For technical effects corresponding to the twenty-fifth aspect and any implementation of the twenty-fifth aspect, refer to the technical effects corresponding to the first aspect and any implementation of the first aspect. Details are not described herein again.

According to a twenty-sixth aspect, an embodiment of this application provides a computer program product. The computer program product includes a software program, and when the software program is executed by a computer or a processor, an electronic device is enabled to perform the decoding method according to any one of the second aspect or the possible implementations of the second aspect.

The twenty-sixth aspect and any implementation of the twenty-sixth aspect respectively correspond to the second aspect and any implementation of the second aspect. For technical effects corresponding to the twenty-sixth aspect and any implementation of the twenty-sixth aspect, refer to the technical effects corresponding to the second aspect and any implementation of the second aspect. Details are not described herein again.

According to a twenty-seventh aspect, an embodiment of this application provides a computer program product. The computer program product includes a software program, and when the software program is executed by a computer or a processor, an electronic device is enabled to perform the encoding method according to any one of the third aspect or the possible implementations of the third aspect.

The twenty-seventh aspect and any implementation of the twenty-seventh aspect respectively correspond to the third aspect and any implementation of the third aspect. For technical effects corresponding to the twenty-seventh aspect and any implementation of the twenty-seventh aspect, refer to the technical effects corresponding to the third aspect and any implementation of the third aspect. Details are not described herein again.

According to a twenty-eighth aspect, an embodiment of this application provides a computer program product. The computer program product includes a software program, and when the software program is executed by a computer or a processor, an electronic device is enabled to perform the decoding method according to any one of the fourth aspect or the possible implementations of the fourth aspect.

The twenty-eighth aspect and any implementation of the twenty-eighth aspect respectively correspond to the fourth aspect and any implementation of the fourth aspect. For technical effects corresponding to the twenty-eighth aspect or any implementation of the twenty-eighth aspect, refer to the technical effects corresponding to the fourth aspect or any implementation of the fourth aspect. Details are not described herein again.

## BRIEF DESCRIPTION OF DRAWINGS

FIG. 1 shows an example of a schematic diagram of an application scenario;
FIG. 2 shows an example of a schematic diagram of data transmission;
FIG. 3a shows an example of a schematic diagram of an encoding process;
FIG. 3b shows an example of a schematic diagram of a data processing process;
FIG. 4 shows an example of a schematic diagram of decoding;
FIG. 5 shows an example of a schematic diagram of data transmission;
FIG. 6 shows an example of a schematic diagram of an encoding process;
FIG. 7 shows an example of a schematic diagram of decoding;
FIG. 8 shows an example of a schematic diagram of data transmission;
FIG. 9 shows an example of a schematic diagram of an encoding process;
FIG. 10 shows an example of a schematic diagram of an encoding process; and
FIG. 11 shows an example of a schematic diagram of a structure of an apparatus.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object and a second target object are used to distinguish between different target objects, but are not used to describe a particular order of the target objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the description of embodiments of this application, unless otherwise stated, "a plurality of" means two or more than two. For example, a plurality of processing units mean two or more processing units; and a plurality of systems mean two or more systems.

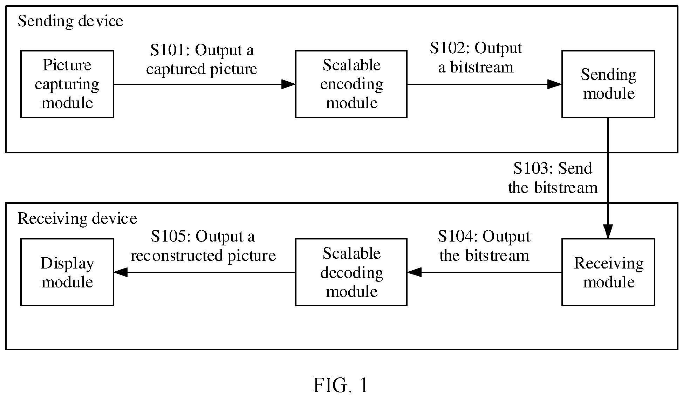

FIG. 1 shows an example of a schematic diagram of an application scenario.

Refer to FIG. 1. For example, the application scenario in FIG. 1 may include various video service scenes, for example, a video conference scene, a video phone scene, an online education scene, a remote tutoring scene, a low-delay live broadcast scene, a cloud game scene, a wireless screen inter-projection scene, and a wireless extended screen scene. This is not limited in embodiments of this application.

Refer to FIG. 1. For example, the application scenario may include a sending device and a receiving device.

For example, the sending device includes but is not limited to a server, a personal computer (Personal Computer, PC), a notebook computer, a tablet computer, a mobile phone, and a watch.

For example, the receiving device includes but is not limited to a PC, a notebook computer, a tablet computer, a mobile phone, and a watch.

For example, in the video conference scene, the sending device may be a PC or a notebook computer, and the receiving device may be a PC or a notebook computer.

For example, in the online education scene, the sending device may be a PC or a notebook computer, and the receiving device may be a tablet computer.

For example, in the cloud game scenario, the sending device may be a server, and the receiving device may be a tablet computer, a PC, a notebook computer, or a mobile phone.

For example, the sending device may include a picture capturing module, a scalable encoding module, and a sending module. For example, the scalable encoding module may be a software module, or may be a hardware module. This is not limited in embodiments of this application. It should be understood that FIG. 1 shows merely an example of the sending device. The sending device in some other embodiments of this application has more modules than those shown in FIG. 1. This is not limited in embodiments of this application.

For example, the picture capturing module is configured to capture a picture.

For example, the scalable encoding module is configured for scalable encoding decision-making and encoding.

For example, the sending module is configured to send data.

For example, the receiving device may include a display module, a scalable decoding module, and a receiving module. For example, the scalable decoding module may be a software module, or may be a hardware module. This is not limited in embodiments of this application. It should be understood that FIG. 1 shows merely an example of the receiving device. The receiving device in some other embodiments of this application has more modules than those shown in FIG. 1. This is not limited in embodiments of this application.

For example, the receiving module is configured to receive the data.

For example, the scalable decoding module is configured for decoding and display decision-making of a scalable bitstream.

For example, the display module is configured for display.

Still refer to FIG. 1. For example, a process in which the sending device sends the captured picture to the receiving device for display after capturing the picture is as follows.

S101: The picture capturing module outputs the captured picture to the scalable encoding module.

For example, the picture capturing module may capture a picture by using a camera.

For example, the picture capturing module may capture a picture output by a video card (also referred to as a video adapter).

For example, the picture capturing module may capture a picture in a screen capture manner.

For example, after capturing the picture, the picture capturing module may output the captured picture to the scalable encoding module.

S102: The scalable encoding module outputs a bitstream to the sending module.

For example, after receiving the picture, the scalable encoding module may perform scalable encoding decision-making. The scalable encoding decision-making may include: determining whether to perform next-layer encoding, and/or determining a number of coding layers of the picture; and performing scalable encoding on the picture based on a result of the scalable encoding decision-making, and outputting an encoded bitstream to the sending module.

S 103: The sending module sends the bitstream to the receiving module.

For example, after receiving the bitstream, the sending module may send the bitstream to the receiving device.

S104: The receiving module outputs the received bitstream to the scalable decoding module.

For example, the receiving module of the receiving device may receive the bitstream, and then output the bitstream to the scalable decoding module.

S105: The scalable decoding module outputs a reconstructed picture to the display module.

For example, after receiving the bitstream, the scalable decoding module may decode the bitstream to obtain corresponding reconstructed pictures. Then, the scalable encoding module may select a to-be-displayed reconstructed picture from the reconstructed pictures, and output the to-be-displayed reconstructed picture to the display module.

For example, after receiving the reconstructed picture input by the scalable decoding module, the display module may display the reconstructed picture.

In a possible manner, the scalable encoding decision-making of the scalable encoding module may be: after one-layer encoding is performed on the picture, performing decision-making on whether to perform next-layer encoding on the picture; and determining, based on a decision-making result, whether to perform next-layer encoding on the picture or end encoding of the picture. It should be noted that ending encoding of the picture means ending encoding of a currently encoded picture instead of ending encoding of another frame.

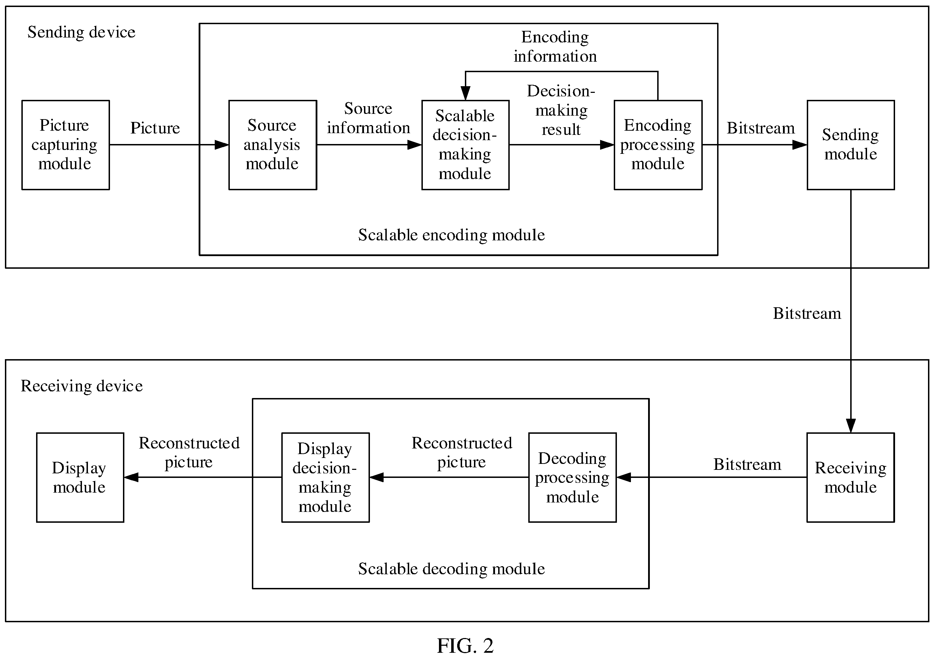

FIG. 2 shows an example of a schematic diagram of data transmission.

Refer to FIG. 2. The scalable encoding module may include a source analysis module, a scalable decision-making module, and an encoding processing module. It should be understood that FIG. 2 shows merely an example of the scalable encoding module. The scalable encoding module in some other embodiments of this application has more modules than those shown in FIG. 2. This is not limited in embodiments of this application.

For example, the source analysis module is configured to: analyze a source input to the source analysis module, and determine source information. For example, the source input to the source analysis module may be a picture input by the picture capturing module to the source analysis module, and the source information may be any one or more types of information obtained by analyzing information carried in the picture. For example, the source information may include complexity, and the complexity may include at least one of the following: spatial complexity, temporal complexity, and temporal-spatial complexity.

For example, the spatial complexity represents a brightness change and texture complexity of a picture, and may be a description of an amount of the information included in the picture.

For example, the temporal complexity represents a change of a current frame relative to a historical encoded frame, and may be a description of an amount of information in a period of time from encoding time of the historical encoded frame to current time.

For example, the temporal-space complexity may be a combination of the temporal complexity and the spatial complexity.

For example, after determining the source information, the source analysis module may transfer the source information to the scalable decision-making module.

For example, the encoding processing module may be configured to: encode the picture, and determine the encoding information. For example, the encoding information may include at least one of the following: residual information of a residual picture, a peak signal-to-noise ratio of the reconstructed picture, an encoding quantization parameter value, a rate-distortion optimization parameter value, and a subjective quality estimate of the reconstructed picture.

For example, the reconstructed picture may be obtained by performing picture reconstruction by the encoding processing module based on a bitstream obtained by encoding a source picture (namely, a picture input to the encoding processing module).

For example, the residual picture may be a difference picture between the source picture and the reconstructed picture of the source picture.

For example, manners of determining the foregoing various types of encoding information are described in a subsequent embodiment.

For example, the encoding processing module may feed back the determined encoding information to the scalable decision-making module, and may transfer the encoded bitstream to the sending module.

For example, the scalable decision-making module is configured to perform, based on the source information and/or the encoding information, decision-making on whether to perform next-layer encoding, to obtain a decision-making result.

For example, the scalable decision-making module may send the decision-making result to the encoding processing module, so that the encoding processing module determines, based on the decision-making result, whether to continue to perform next-layer encoding on the picture or end encoding of the picture.

For example, the sending module may send the bitstream.

For example, a scalable decoding module may include a decoding processing module and a display decision-making module. It should be understood that FIG. 2 shows merely an example of the scalable decoding module. The scalable decoding module in some other embodiments of this application has more modules than those shown in FIG. 2. This is not limited in embodiments of this application.

For example, the receiving module may receive the bitstream, and transfer the bitstream to the decoding processing module.

For example, the decoding processing module is configured to decode the bitstream. For example, after obtaining the reconstructed picture through decoding, the decoding processing module may transfer the reconstructed picture to the display decision-making module.

For example, the display decision-making module is configured to select the to-be-displayed reconstructed picture. For example, the display decision-making module may send the selected to-be-displayed reconstructed picture to the display module, and the display module displays the received reconstructed picture.

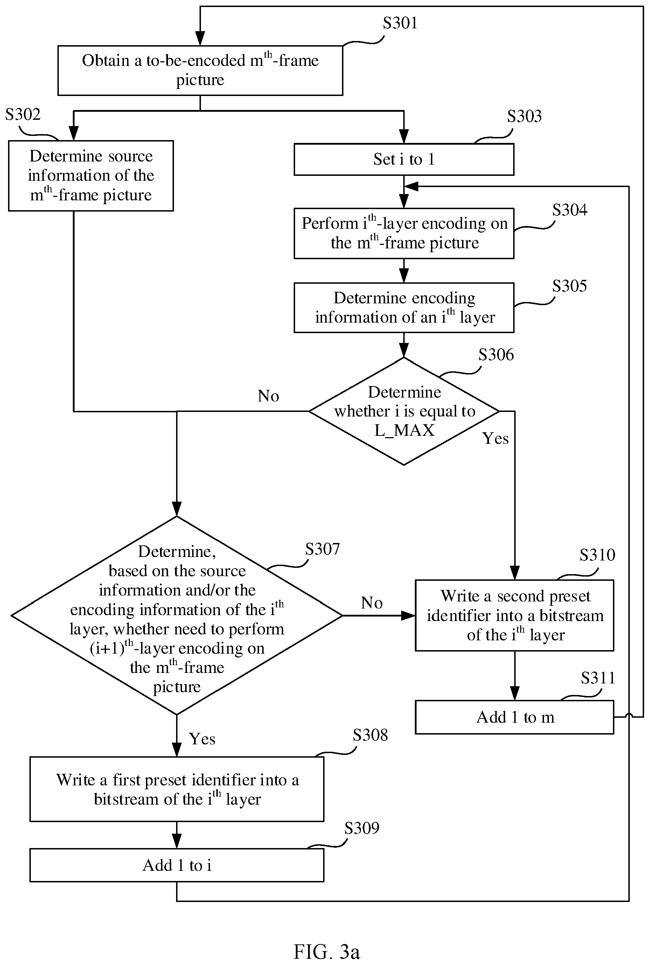

FIG. 3a shows an example of a schematic diagram of an encoding process. Refer to FIG. 3a. An $m^{th}$-frame picture (m is a positive integer) is used as an example to describe a process of encoding the $m^{th}$-frame picture by a scalable encoding module. The process may be described as follows.

S301: Obtain the to-be-encoded $m^{th}$-frame picture.

In a possible manner, a picture capturing module may transfer the picture to a source analysis module in the scalable encoding module, and then the source analysis module obtains the to-be-encoded $m^{th}$-frame picture.

In a possible manner, the picture capturing module may simultaneously transfer the picture to the source analysis module and an encoding processing module in the scalable encoding module, and then the source analysis module and the encoding processing module may obtain the to-be-encoded $m^{th}$-frame picture.

S302: Determine source information of the $m^{th}$-frame picture.

For example, after obtaining the $m^{th}$-frame picture, the source analysis module may perform complexity analysis on the $m^{th}$-frame picture, to determine at least one of spatial complexity, temporal complexity, and temporal-spatial complexity of the $m^{th}$-frame picture.

The following uses an example in which color space of the $m^{th}$-frame picture is in a YUV format for description, where YUV indicates three channels of colors of the picture, Y indicates luminance of the picture, and U and V indicate chrominance of the picture.

(1) Spatial complexity

In a possible manner, the $m^{th}$-frame picture may be divided into N (N is an integer greater than 1) picture blocks. The $m^{th}$-frame picture may be divided into the N picture blocks based on a largest coding unit, or the $m^{th}$-frame picture may be divided into the N picture blocks in another manner. This is not limited in embodiments of this application.

For example, for each picture block, pixel variance values of the picture block on three color channels may be separately calculated. For details, refer to the following formulae.

$$\sigma_{Yk} = \frac{1}{J} \sum_{j=1}^{J} \left[ P_{Ykj} \left( x_j, y_j \right) - \overline{P_{Yk}} \right]^2$$

$$\sigma_{Uk} = \frac{1}{J} \sum_{j=1}^{J} \left[ P_{Ukj} \left( x_j, y_j \right) - \overline{P_{Uk}} \right]^2$$

$$\sigma_{Vk} = \frac{1}{J} \sum_{j=1}^{J} \left[ P_{Vkj} \left( x_j, y_j \right) - \overline{P_{Vk}} \right]^2$$

$\sigma_{Yk}$ indicates a pixel variance value of a $k^{th}$ picture block on a Y channel, k is a positive integer, and a value range of k is 1 to N. $P_{Ykj}$ ($x_j$, $y_j$) indicates a pixel value of a $j^{th}$ sample (whose coordinates are ($x_j$, $y_j$)) in the $k^{th}$ picture block on the Y channel, J is a total number of samples included in the $k^{th}$ picture block, J and j are positive integers, and a value range of j is 1 to J. $\overline{P_{Yk}}$ indicates an average pixel value of all samples in the $k^{th}$ picture block on the Y channel.

$\sigma_{Uk}$ indicates a pixel variance value of a $k^{th}$ picture block on a U channel, k is a positive integer, and a value range of k is 1 to N. $P_{Ukj}$ ($x_j$, $y_j$) indicates a pixel value of a $j^{th}$ sample (whose coordinates are ($x_j$, $y_j$)) in the $k^{th}$ picture block on the U channel, J is a total number of samples included in the $k^{th}$ picture block, J and j are positive integers, and a value range of j is 1 to J. $\overline{P_{Uk}}$ indicates an average pixel value of all samples in the $k^{th}$ picture block on the U channel.

$\sigma_{Vk}$ indicates a pixel variance value of a $k^{th}$ picture block on a V channel, k is a positive integer, and a value range of k is 1 to N. $P_{Vkj}$ ($x_j$, $y_j$) indicates a pixel value of a $j^{th}$ sample (whose coordinates are ($x_j$, $y_j$)) in the $k^{th}$ picture block on the V channel, J is a total number of samples included in the $k^{th}$ picture block, J and j are positive integers, and a value range of j is 1 to J. $\overline{P_{Vk}}$ indicates an average pixel value of all samples in the $k^{th}$ picture block on the V channel.

For example, the spatial complexity of the $m^{th}$-frame picture on the Y channel may be obtained through calculation based on pixel variance values of the N picture blocks on the Y channel. Optionally, the spatial complexity of the $m^{th}$-frame picture on the Y channel may be determined by calculating an average value of pixel variance values of the N picture blocks on the Y channel. For details, refer to the following formula.

$$\sigma_{YS} = \frac{1}{N} \sum_{k=1}^{N} \sigma_{Yk}$$

$\sigma_{YS}$ indicates the spatial complexity of the $m^{th}$-frame picture on the Y channel.

For example, the spatial complexity of the $m^{th}$-frame picture on the U channel may be obtained through calculation based on pixel variance values of the N picture blocks on the U channel. Optionally, the spatial complexity of the $m^{th}$-frame picture on the U channel may be determined by calculating an average value of pixel variance values of the N picture blocks on the U channel. For details, refer to the following formula.

$$\sigma_{US} = \frac{1}{N} \sum_{k=1}^{N} \sigma_{Uk}$$

$\sigma_{US}$ indicates the spatial complexity of the $m^{th}$-frame picture on the U channel.

For example, the spatial complexity of the $m^{th}$-frame picture on the V channel may be obtained through calculation based on pixel variance values of the N picture blocks on the V channel. Optionally, the spatial complexity of the $m^{th}$-frame picture on the V channel may be determined by calculating an average value of pixel variance values of the N picture blocks on the V channel. For details, refer to the following formula.

$$\sigma_{VS} = \frac{1}{N} \sum_{k=1}^{N} \sigma_{Vk}$$

$\sigma_{VS}$ indicates the spatial complexity of the $m^{th}$-frame picture on the V channel.

For example, the spatial complexity of the $m^{th}$-frame picture may be calculated based on the spatial complexity of the $m^{th}$-frame picture on the Y channel, the spatial complexity of the $m^{th}$-frame picture on the U channel, and the spatial complexity of the $m^{th}$-frame picture on the V channel. For example, weighted calculation may be performed on the spatial complexity of the $m^{th}$-frame picture on the Y channel, the spatial complexity of the $m^{th}$-frame picture on the U channel, and the spatial complexity of the $m^{th}$-frame picture on the V channel, to determine the spatial complexity of the $m^{th}$-frame picture. For details, refer to the following formula.

$$\sigma_S = w_0 \sigma_{YS} + w_1 \sigma_{US} + w_2 \sigma_{VS}$$

$\sigma_S$ is the spatial complexity of the $m^{th}$-frame picture, $w_0$ is a weight of the spatial complexity of the $m^{th}$-frame picture on the Y channel, and $w_1$ is a weight of the spatial complexity of the $m^{th}$-frame picture on the U channel, and $w_2$ is a weight of the spatial complexity of the $m^{th}$-frame picture on the V channel. $w_0 + w_1 + w_2 = 1$, and $w_0$, $w_1$, and $w_2$ may be set based on a requirement. This is not limited in embodiments of this application.

(2) Temporal complexity

In a possible manner, the $m^{th}$-frame picture may be divided into N (which is an integer greater than 1) picture blocks, and a frame of picture (subsequently represented as an $f^{th}$-frame picture) that has been encoded before an $m^{th}$ frame is divided into N picture blocks.

For example, for a $k^{th}$ picture block in the N picture blocks, a difference picture between a $k^{th}$ picture block in the $m^{th}$ frame and a $k^{th}$ picture block in the $f^{th}$-frame picture may be determined, to obtain a $k^{th}$ difference picture block. For example, the $k^{th}$ difference picture block may be obtained by subtracting pixel values of samples at corresponding locations in the $k^{th}$ picture block in the $f^{th}$-frame picture from pixel values of samples in the $k^{th}$ picture block in the $m^{th}$ frame. k is a positive integer, and a value range of k is 1 to N.

For example, for the $k^{th}$ difference picture block, pixel variance values of the $k^{th}$ difference picture block on three color channels may be separately calculated. For details, refer to the following formulae.

$$\sigma^{D}_{Yk} = \frac{1}{J} \sum_{j=1}^{J} \left[ \left| P^{D}_{Ykj} \left( x_j, y_j \right) \right| - \overline{\left| P^{D}_{Yk} \right|} \right]^2$$

$$\sigma^D_{Uk} = \frac{1}{J} \sum_{j=1}^{J} \left[ \left| P^D_{Ukj}(x_j, y_j) \right| - \overline{\left| P_{Uk}^{D} \right|} \right]^2$$

$$\sigma^D_{Vk} = \frac{1}{J} \sum_{j=1}^{J} \left[ \left| P^D_{Vkj}(x_j, y_j) \right| - \overline{\left| P_{vk}^{D} \right|} \right]^2$$

$\sigma^D_{Yk}$ indicates a pixel variance value of a $k^{th}$ difference picture block on a Y channel, k is a positive integer, and a value range of k is 1 to N. $P^D_{Ykj}(x_j, y_j)$ indicates a pixel value of a $j^{th}$ sample (whose coordinates are $(x_j, y_j)$) in the $k^{th}$ difference picture block on the Y channel, J is a total number of samples included in the $k^{th}$ difference picture block, J and j are positive integers, and a value range of j is 1 to J. $\overline{|P_{Yk}^D|}$ indicates an average value of absolute pixel values of all samples in the $k^{th}$ difference picture block on the Y channel (the average value of absolute pixel values of all samples in the $k^{th}$ difference picture block on the Y channel may be obtained by first determining absolute values of pixel values of all the samples in the $k^{th}$ difference picture block on the Y channel, and then, calculating an average value of the absolute values of the pixel values of all the samples in the $k^{th}$ difference picture block on the Y channel).

$\sigma^D_{Uk}$ indicates a pixel variance value of a $k^{th}$ difference picture block on a U channel, k is a positive integer, and a value range of k is 1 to N. $P^D_{Ukj}(x_j, y_j)$ indicates a pixel value of a $j^{th}$ sample (whose coordinates are $(x_j, y_j)$) in the $k^{th}$ difference picture block on the Y channel, J is a total number of samples included in the $k^{th}$ difference picture block, J and j are positive integers, and a value range of j is 1 to J. $\overline{|P_{Uk}^D|}$ indicates an average value of absolute pixel values of all samples in the $k^{th}$ difference picture block on the U channel.

$\sigma^D_{Vk}$ indicates a pixel variance value of a $k^{th}$ difference picture block on a V channel, k is a positive integer, and a value range of k is 1 to N. $P^D_{Vkj}(x_j, y_j)$ indicates a pixel value of a $j^{th}$ sample (whose coordinates are $(x_j, y_j)$) in the $k^{th}$ difference picture block on the V channel, J is a total number of samples included in the $k^{th}$ difference picture block, J and j are positive integers, and a value range of j is 1 to J. $\overline{|P_{Vk}^D|}$ indicates an average value of absolute pixel values of all samples in the $k^{th}$ difference picture block on the V channel.

For example, the temporal complexity of the $m^{th}$-frame picture on the Y channel may be obtained through calculation based on pixel variance values of the N difference picture blocks on the Y channel. Optionally, the temporal complexity of the $m^{th}$-frame picture on the Y channel may be determined by calculating an average value of pixel variance values of the N difference picture blocks on the Y channel. For details, refer to the following formula.

$$\sigma_{YT} = \frac{1}{N} \sum_{k=1}^{N} \sigma^D_{Yk}$$

$\sigma_{YT}$ indicates the spatial complexity of the $m^{th}$-frame picture on the Y channel.

For example, the temporal complexity of the $m^{th}$-frame picture on the U channel may be obtained through calculation based on pixel variance values of the N difference picture blocks on the U channel. Optionally, the temporal complexity of the $m^{th}$-frame picture on the U channel may be determined by calculating an average value of pixel variance values of the N difference picture blocks on the U channel. For details, refer to the following formula.

$$\sigma_{UT} = \frac{1}{N} \sum_{k=1}^{N} \sigma^D_{Uk}$$

$\sigma_{UT}$ indicates the spatial complexity of the $m^{th}$-frame picture on the U channel.

For example, the temporal complexity of the $m^{th}$-frame picture on the V channel may be obtained through calculation based on pixel variance values of the N difference picture blocks on the V channel. Optionally, the temporal complexity of the $m^{th}$-frame picture on the V channel may be determined by calculating an average value of pixel variance values of the N difference picture blocks on the V channel. For details, refer to the following formula.

$$\sigma_{VT} = \frac{1}{N} \sum_{k=1}^{N} \sigma^D_{Vk}$$

$\sigma_{VT}$ indicates the spatial complexity of the $m^{th}$-frame picture on the V channel.

For example, the temporal complexity of the $m^{th}$-frame picture may be calculated based on the temporal complexity of the $m^{th}$-frame picture on the Y channel, the temporal complexity of the $m^{th}$-frame picture on the U channel, and the temporal complexity of the $m^{th}$-frame picture on the V channel. For example, weighted calculation may be performed on the temporal complexity of the $m^{th}$-frame picture on the Y channel, the temporal complexity of the $m^{th}$-frame picture on the U channel, and the temporal complexity of the $m^{th}$-frame picture on the V channel, to determine the temporal complexity of the $m^{th}$-frame picture. For details, refer to the following formula.

$$\sigma_T = w_3 \sigma_{YT} + w_4 \sigma_{UT} + w_5 \sigma_{VT}$$

$\sigma_T$ is the temporal complexity of the $m^{th}$-frame picture, $w_3$ is a weight of the temporal complexity of the $m^{th}$-frame picture on the Y channel, and $w_4$ is a weight of the temporal complexity of the $m^{th}$-frame picture on the U channel, and $w_5$ is a weight of the temporal complexity of the $m^{th}$-frame picture on the V channel. $w_3 + w_4 + w_5 = 1$, and $w_3$, $w_4$, and $w_5$ may be set based on a requirement. This is not limited in embodiments of this application.

(3) Temporal-spatial complexity

In a possible manner, weighted averaging may be performed on the spatial complexity and temporal complexity of the $m^{th}$-frame picture, to obtain temporal-spatial complexity of an $m^{th}$ frame. For details, refer to the following formula.

$$\sigma = \frac{\sigma_T + \sigma_S}{2}$$

It should be understood that weighted calculation may alternatively be performed on the spatial complexity and temporal complexity of the $m^{th}$-frame picture based on a weight preset for the spatial complexity and a weight preset for the temporal complexity, to obtain the temporal-spatial complexity of the $m^{th}$ frame. This is not limited in embodiments of this application.

It should be noted that the spatial complexity and the temporal complexity may alternatively be obtained based on prediction information obtained by performing precoding by the encoding processing module. The prediction information may be provided by the encoding processing module. For example, the spatial complexity and the temporal complexity may be determined based on a variance value of a residual block obtained through precoding. The residual block obtained through precoding may be a difference picture block between a precoded block obtained by precoding a picture block of the $m^{th}$ frame and the picture block.

For example, one or more of the temporal complexity, the spatial complexity, and the temporal-spatial complexity of the $m^{th}$ frame may be used as source information of the $m^{th}$ frame.

For example, the source analysis module may use a coding scheme that is preset for each frame (the coding scheme includes inter-frame predictive coding and intra-frame predictive coding), to determine which of the temporal complexity, the spatial complexity, and the temporal-spatial complexity is used as the source information of the $m^{th}$ frame. For example, if the preset coding scheme of the $m^{th}$ frame is intra-frame predictive coding, only the spatial complexity may be used as the source information of the $m^{th}$ frame. For example, if the preset coding scheme of the $m^{th}$ frame is inter-frame predictive coding, only the temporal complexity may be used as the source information of the $m^{th}$ frame. If the preset coding scheme of the $m^{th}$ frame is intra-frame predictive coding and inter-frame predictive coding, only the temporal-spatial complexity may be used as the source information of the $m^{th}$ frame, or the spatial complexity and the temporal complexity may be used as the source information of the $m^{th}$ frame.

For example, after determining the source information, the source analysis module may input the source information to a scalable decision-making module, and the scalable decision-making module performs scalable decision-making based on the source information.

S303: Set i to 1.

For example, the scalable decision-making module may set i to 1, and then input a value of i to the encoding processing module.

For example, the scalable decision-making module may further determine an encoding parameter of an $i^{th}$ layer, and input the encoding parameter of the $i^{th}$ layer to the encoding processing module.

In a possible manner, encoding parameters may be preset, and the scalable decision-making module may obtain the encoding parameter of the $i^{th}$ layer from the preset encoding parameters. For example, the encoding parameter may include at least one of the following: a resolution, an encoding quantization parameter, and reference frame information.

For example, the resolution is a resolution of a picture input to the encoding processing module. For example, the resolution may include a source resolution and a target encoding resolution. The source resolution is a resolution of the $m^{th}$-frame picture, and the target encoding resolution is a resolution of a picture that can be reconstructed after the picture is encoded, or a resolution actually encoded by the encoding processing module.

For example, the encoding quantization parameter is a quantization parameter used by the encoding processing module to encode a picture. The encoding quantization parameter determines a quality distortion degree of an encoded picture. A larger encoding quantization parameter indicates a higher distortion degree of the encoded picture than that of a source picture. A smaller encoding quantization parameter indicates a less serious distortion degree of the encoded picture than that of the source picture.

For example, the reference frame information indicates a reference frame. The reference frame information may be a sequence number (also referred to as a picture order count (Picture Order Count, POC)) in which the reference frame enters the encoding processing module, or may also be a distance between the reference frame and a currently encoded picture of the encoding processing module (the distance is a difference between the sequence number in which the reference frame enters the encoding processing module and a sequence number in which the currently encoded picture enters the encoding processing module).

For example, the sequence number in which the reference frame enters the encoding processing module may be determined according to a sequence in which the reference frame enters the encoding processing module. For example, a POC is the same as a frame number of a picture. For example, two frames of pictures are captured. After a first frame of picture is input to the encoding processing module, for the encoding processing module, the first frame of picture is input, and a POC of this frame of picture is 1. After a second frame of picture is input to the encoding processing module, for the encoding processing module, the second frame of picture is input, and a POC of this input frame of picture is 2. The rest can be deduced in the same manner.

In another possible manner, the scalable decision-making module may determine the encoding parameter of the $i^{th}$ layer based on the complexity of the $m^{th}$-frame picture and the channel feedback information. This is not limited in embodiments of this application.

For example, a sequence of performing S302 and S303 is not limited in embodiments of this application.

For example, if the encoding processing module also obtains the $m^{th}$-frame picture, the scalable decision-making module only needs to input the value of i and an encoding parameter of a base layer to the encoding processing module after setting i to 1.

For example, if only the source analysis module obtains the $m^{th}$-frame picture, the source analysis module may input the $m^{th}$-frame picture to the scalable decision-making module when performing S302. After setting i to 1, the scalable decision-making module inputs the value of i, the encoding parameter of the base layer, and the $m^{th}$-frame picture to the encoding processing module.

For example, a sequence in which the scalable decision-making module inputs the value of i, the encoding parameter of the base layer, and the $m^{th}$-frame picture to the encoding processing module is not limited in embodiments of this application.

S304: Perform $i^{th}$-layer encoding on the $m^{th}$-frame picture.

For example, if i is 1, it indicates that encoding of the base layer needs to be performed on the $m^{th}$-frame picture. If i is greater than 1, it indicates that encoding of an enhancement layer needs to be performed on the $m^{th}$-frame picture. For example, when i is 2, it indicates that encoding of a first enhancement layer needs to be performed on the $m^{th}$-frame picture, when i is 3, it indicates that encoding of a second enhancement layer needs to be performed on the $m^{th}$-frame picture, and so on. In other words, the $i^{th}$ layer may be the base layer, or may be the enhancement layer. For each frame of picture, first layer (namely, base layer) encoding may be performed on the frame of picture.

For example, the encoding processing module performs $i^{th}$-layer encoding on the $m^{th}$-frame picture based on the encoding parameter of the $i^{th}$ layer.

S305: Determine encoding information of the $i^{th}$ layer.

For example, after performing $i^{th}$-layer encoding on the $m^{th}$-frame picture, the encoding processing module may determine the encoding information of the $i^{th}$ layer. The encoding information of the $i^{th}$ layer may include at least one of the following: residual information of a residual picture of the $i^{th}$ layer, a peak signal-to-noise ratio of a reconstructed picture of the $i^{th}$ layer, an encoding quantization parameter value of the $i^{th}$ layer, a rate-distortion optimization parameter value of the $i^{th}$ layer, and a subjective quality estimate of the reconstructed picture of the $i^{th}$ layer.

(1) Residual information of the residual picture of the $i^{th}$ layer

For example, the residual information of the residual picture may be complexity of the residual picture. The complexity of the residual picture may include at least one of the following: spatial complexity of the residual picture, temporal complexity of the residual picture, and temporal-spatial complexity of the residual picture.

In a possible manner, picture reconstruction may be performed based on a bitstream obtained by performing

17

$i^{th}$-layer encoding on the $m^{th}$-frame picture, to obtain a reconstructed picture of the $i^{th}$ layer. Then, the residual picture of the $i^{th}$ layer may be obtained by subtracting samples of the $m^{th}$-frame picture from samples of the reconstructed picture of the $i^{th}$ layer one by one. Then, complexity of the residual picture of the $i^{th}$ layer is calculated in the manner described above, to obtain the residual information of the residual picture of the $i^{th}$ layer.

In a possible manner, for each $M1 \times M2$ residual block in the residual picture of the $i^{th}$ layer, Hadamard transform (Hadamard Transform) may be performed on the $M1 \times M2$ residual block, to obtain an $M1 \times M2$ transform domain block pixel matrix. Then, absolute values of values of all elements in the pixel matrix are calculated, and the absolute values of the values of all the elements in the pixel matrix are added, to obtain complexity of the $M1 \times M2$ residual block. Then, complexity of the residual picture of the $i^{th}$ layer may be determined based on complexities of a plurality of $M1 \times M2$ residual blocks. For details, refer to the foregoing description. Details are not described herein again. M1 and M2 may be equal, or may not be equal. This is not limited in embodiments of this application. Alternatively, the Hadamard transform may be replaced with a discrete cosine transform or a discrete Fourier transform. This is not limited in embodiments of this application.

(2) Peak signal-to-noise ratio of the reconstructed picture of the $i^{th}$ layer

For example, a mean square error between the $m^{th}$-frame picture and the reconstructed picture of the $i^{th}$ layer may be calculated, and then the peak signal-to-noise ratio of the reconstructed picture of the $i^{th}$ layer is calculated based on the mean square error and a maximum pixel value in the reconstructed picture of the $i^{th}$ layer.

(3) Encoding quantization parameter value of the $i^{th}$ layer

For example, the encoding processing module may obtain the encoding quantization parameter value of the $i^{th}$ layer from the encoding parameter of the $i^{th}$ layer input by the scalable decision-making module.

(4) Rate-distortion optimization parameter value of the $i^{th}$ layer

For example, the rate-distortion optimization parameter value is a data amount (rate) optimization distortion amount required for picture encoding.

For example, the rate-distortion optimization parameter value is essentially a Lagrange factor in a rate-distortion optimization formula, and a rate-distortion optimization problem may be converted into finding an optimal encoding mode or encoding parameter to minimize a weighted sum of a distortion and a bit rate. This is shown in the following expression.

$$\min_{B \in S} \left\{ D\left(B\right) + \lambda R\left(B\right) \right\}$$

B refers to an encoding mode or an encoding parameter, S is a finite set of the variable B, D(B) indicates a distortion value obtained in case of a given B, R(B) indicates a bit rate obtained in case of a given B, and $\lambda$ is the Lagrange factor. When any given $\lambda \geq 0$, a set of optimal solutions D(B*) and R(B*) can be obtained. Generally, in a process of optimization, a $\lambda$ value is predetermined, and determines importance of the bit rate in an objective function. When the $\lambda$ value is larger, a current layer tends to select a coding scheme with a lower bit rate and poor video quality for coding. On the contrary, the current layer tends to select a coding scheme with a higher bit rate and good video quality for coding.

(5) Subjective quality estimate of the reconstructed picture of the $i^{th}$ layer

For example, a subjective quality estimate includes but is not limited to a structural similarity (Structural Similarity, SSIM) value, a multi-scale structural similarity (Multi-Scale Structural Similarity, MS-SSIM) value, a mean opinion score (Mean Opinion Score, MOS) value, a universal image quality index (Universal Image Quality Index, UIQI) value, and the like. In embodiments of this application, an example in which the SSIM is used as the subjective quality estimate is used for description.

For example, a pixel average value and a pixel variance of the $m^{th}$-frame picture, and a pixel average value and a pixel variance of the reconstructed picture of the $i^{th}$ layer may be calculated, and then an SSIM value is calculated based on the pixel average value and the pixel variance of the $m^{th}$-frame picture, and the pixel average value and the pixel variance of the reconstructed picture of the $i^{th}$ layer. For details, refer to the SSIM value calculating method in the conventional technology. Details are not described herein again.

For example, after determining the encoding information of the $i^{th}$ layer, the encoding processing module may feed back the encoding information of the $i^{th}$ layer to the scalable decision-making module, and the scalable decision-making module performs scalable decision-making based on the encoding information of the $i^{th}$ layer.

S306: Determine whether i is equal to L_MAX.

For example, the scalable decision-making module may first determine whether i is equal to L_MAX. L_MAX indicates a maximum number of layers supported by the encoding processing module.

In a possible manner, when i is equal to L_MAX, because the encoding processing module cannot perform next-layer encoding on the mth-frame picture, in this case, scalable decision-making does not need to be performed on the mth-frame picture, S310 may be performed, and then S311 may be performed, to end encoding of the mth-frame picture.

In a possible manner, when i is equal to L_MAX, because the encoding processing module cannot perform next-layer encoding on the mth-frame picture, in this case, scalable decision-making does not need to be performed on the mth-frame picture, and S311 may be directly performed, to end encoding of the mth-frame picture.

For example, when i is less than L _MAX, scalable decision-making may be performed on the mth-frame picture. In this case, S307 may be performed.

S307: Determine, based on the source information and/or the encoding information of the ith layer, whether need to perform (i+1)th-layer encoding on the mth-frame picture.

In a possible manner, the scalable decision-making module may determine, based on the source information, whether need to perform (i+1)th-layer encoding on the mth-frame picture.

For example, when the source information meets a first preset condition, it may be determined that (i+1)th-layer encoding needs to be performed on the mth-frame picture. When the source information does not meet a first preset condition, it may be determined that (i+1)th-layer encoding does not need to be performed on the mth-frame picture.

For example, the first preset condition may include at least one of the following:

spatial complexity is greater than a first complexity threshold corresponding to the ith layer;
temporal complexity is greater than a second complexity threshold corresponding to the ith layer; and
temporal-spatial complexity is greater than a third complexity threshold corresponding to the ith layer.

For example, different layers correspond to different first complexity thresholds, and a first complexity threshold corresponding to a high layer is greater than a first complexity threshold corresponding to a low layer. In other words, when i is greater than 1, the first complexity threshold corresponding to the ith layer is greater than a first complexity threshold corresponding to a (i-1)th layer. For example, a first complexity threshold corresponding to a second layer is greater than a first complexity threshold corresponding to a first layer, and a first complexity threshold corresponding to a third layer is greater than the first complexity threshold corresponding to the second layer.

For example, different layers correspond to different second complexity thresholds, and a second complexity threshold corresponding to a high layer is greater than a second complexity threshold corresponding to a low layer. In other words, when i is greater than 1, the second complexity threshold corresponding to the ith layer is greater than a second complexity threshold corresponding to a (i-1)th layer. For example, a second complexity threshold corresponding to a second layer is greater than a second complexity threshold corresponding to a first layer, and a second complexity threshold corresponding to a third layer is greater than the second complexity threshold corresponding to the second layer.

For example, different layers correspond to different third complexity thresholds, and a third complexity threshold corresponding to a high layer is greater than a third complexity threshold corresponding to a low layer. In other words, when i is greater than 1, the third complexity threshold corresponding to the ith layer is greater than a third complexity threshold corresponding to the (i-1)th layer. For example, a third complexity threshold corresponding to a second layer is greater than a third complexity threshold corresponding to a first layer, and a third complexity threshold corresponding to a third layer is greater than the third complexity threshold corresponding to the second layer.

In a possible manner, a manner of determining the first complexity threshold corresponding to the ith layer may be shown by the following formula.

$$\theta1_i = \theta1_0 + \left(i - 1\right) *_\triangle \theta1_i$$

$\theta1_i$ is the first complexity threshold corresponding to the ith layer, $\theta1_0$ is a preset first complexity initial value, $\triangle\theta1_i$ is a first threshold step corresponding to the ith layer, and $\triangle\theta1_i$ is greater than 0.

It should be noted that when i is different, $\triangle\theta3_i$ may be the same or may be different, and may be specifically set based on a requirement. This is not limited in embodiments of this application.

In a possible manner, a manner of determining the second complexity threshold corresponding to the ith layer may be shown by the following formula.

$$\theta2_i = \theta2_0 + \left(i - 1\right) *_\triangle \theta2_i$$

$\theta2_i$ is the second complexity threshold corresponding to the $i^{th}$ layer, $\theta2_0$ is a preset second complexity initial value, $\triangle\theta2_i$ is a second threshold step corresponding to the $i^{th}$ layer, and $\triangle\theta2_i$ is greater than 0.

It should be noted that when i is different, $\triangle\theta2_i$ may be the same or may be different, and may be specifically set based on a requirement. This is not limited in embodiments of this application.

In a possible manner, a manner of determining the third complexity threshold corresponding to the $i^{th}$ layer may be shown by the following formula.

$$\theta3_i = \theta3_0 + \left(i - 1\right) *_\triangle\theta3_i$$

$\theta3_i$ is the third complexity threshold corresponding to the $i^{th}$ layer, $\theta3_0$ is a preset third complexity initial value, $\triangle\theta3_i$ is a third threshold step corresponding to the $i^{th}$ layer, and $\triangle\theta3_i$ is greater than 0.

It should be noted that when i is different, $\triangle\theta3_i$ may be the same or may be different, and may be specifically set based on a requirement. This is not limited in embodiments of this application.

It should be noted that any two of $\triangle\theta1_i$, $\triangle\theta2_i$, and $\triangle\theta3_i$ may be the same, or may be different, and may be specifically set based on a requirement. This is not limited in embodiments of this application.

It should be noted that any two of $\theta1_0$, $\theta2_0$, and $\theta3_0$ may be the same, or may be different, and may be specifically set based on a requirement. This is not limited in embodiments of this application.

For example, that the spatial complexity of the $m^{th}$-frame picture is greater than the first complexity threshold corresponding to the $i^{th}$ layer indicates that the spatial complexity of the $m^{th}$-frame picture is high. That the temporal complexity of the $m^{th}$-frame picture is greater than the second complexity threshold corresponding to the $i^{th}$ layer indicates that the temporal complexity of the $m^{th}$-frame picture is high. That the temporal-spatial complexity of the $m^{th}$-frame picture is greater than the third complexity threshold corresponding to the $i^{th}$ layer indicates that the temporal-spatial complexity of the $m^{th}$-frame picture is high.

In a possible manner, the scalable decision-making module may determine, based on the encoding information of the $i^{th}$ layer, whether need to perform $(i+1)^{th}$-layer encoding on the $m^{th}$-frame picture.

For example, when the encoding information of the $i^{th}$ layer meets a second preset condition, it may be determined that $(i+1)^{th}$-layer encoding needs to be performed on the $m^{th}$-frame picture. When the encoding information of the $i^{th}$ layer does not meet a second preset condition, it may be determined that $(i+1)^{th}$-layer encoding does not need to be performed on the $m^{th}$-frame picture.

For example, the second preset condition includes at least one of the following:

residual information of a reconstructed picture of the $i^{th}$ layer is greater than a residual threshold;
a peak signal-to-noise ratio of the reconstructed picture of the $i^{th}$ layer is less than a signal-to-noise ratio threshold;
an encoding quantization parameter value of the $i^{th}$ layer is greater than a quantization threshold;
a rate-distortion optimization parameter value of the $i^{th}$ layer is greater than a distortion threshold; and
a subjective quality estimate of the reconstructed picture of the $i^{th}$ layer is less than a subjective quality threshold.

For example, the residual threshold, the signal-to-noise ratio threshold, the quantization threshold, the distortion threshold, and the subjective quality threshold may all be set based on a requirement. This is not limited in embodiments of this application.

For example, that the residual information of the reconstructed picture of the $i^{th}$ layer is greater than the residual threshold indicates that a residual between the reconstructed picture of the $i^{th}$ layer and the $m^{th}$-frame picture is large, that is, the complexity of the $m^{th}$-frame picture is higher. That the peak signal-to-noise ratio of the reconstructed picture of the $i^{th}$ layer is less than the signal-to-noise ratio threshold indicates that after $i^{th}$-layer encoding is performed on the $m^{th}$-frame picture, picture quality is poor. That the encoding quantization parameter value of the $i^{th}$ layer is greater than the quantization threshold indicates that after $i^{th}$-layer encoding is performed on the $m^{th}$-frame picture, picture distortion is large. That the rate-distortion optimization parameter value of the $i^{th}$ layer is greater than the distortion threshold indicates that a bitstream obtained by performing $i^{th}$-layer encoding on the $m^{th}$-frame picture is small and is poor in quality. That the subjective quality estimate of the reconstructed picture of the $i^{th}$ layer is less than the subjective quality threshold indicates that after $i^{th}$-layer encoding is performed on the $m^{th}$-frame picture, subjective picture quality is poor.

In a possible manner, the scalable decision-making module may determine, based on the source information and the encoding information of the $i^{th}$ layer, whether to perform $(i+1)^{th}$-layer encoding on the $m^{th}$-frame picture.

For example, when the source information meets a first preset condition, or the encoding information of the $i^{th}$ layer meets a second preset condition, it is determined that $(i+1)^{th}$-layer encoding needs to be performed on the $m^{th}$-frame picture. When the source information does not meet a first preset condition, and the encoding information of the $i^{th}$ layer does not meet a second preset condition, it is determined that $(i+1)^{th}$-layer encoding does not need to be performed on the $m^{th}$-frame picture.

For example, when the source information does not meet a first preset condition, or the encoding information of the $i^{th}$ layer does not meet a second preset condition, it is determined that $(i+1)^{th}$-layer encoding does not need to be performed on the $m^{th}$-frame picture.

For example, in a possible case, the source information includes temporal-spatial complexity of the $m^{th}$-frame picture, and the encoding information of the $i^{th}$ layer includes: the residual information of the residual picture of the $i^{th}$ layer, the peak signal-to-noise ratio of the reconstructed picture of the $i^{th}$ layer, the encoding quantization parameter value of the $i^{th}$ layer, the rate-distortion optimization parameter value of the $i^{th}$ layer, and the subjective quality estimate of the reconstructed picture of the $i^{th}$ layer. In this case, in a possible manner, a progressive priority manner may be used to determine whether need to perform $(i+1)^{th}$-layer encoding on the $m^{th}$-frame picture.

For example, an ascending order of priorities of the foregoing parameters may be as follows: the subjective quality estimate of the reconstructed picture of the $i^{th}$ layer, the rate-distortion optimization parameter value of the $i^{th}$ layer, the encoding quantization parameter value of the $i^{th}$ layer, the peak signal-to-noise ratio of the reconstructed picture of the $i^{th}$ layer, the residual information of the residual picture of the $i^{th}$ layer, and the temporal-spatial complexity of the $m^{th}$-frame picture. In this case, it may be first determined whether the subjective quality estimate of the reconstructed picture of the $i^{th}$ layer is less than the subjective quality threshold. If the subjective quality estimate of the reconstructed picture of the $i^{th}$ layer is less than the subjective quality threshold, it is determined that $(i+1)^{th}$-layer encoding needs to be performed on the $m^{th}$-frame picture. If the subjective quality estimate of the reconstructed picture of the $i^{th}$ layer is greater than or equal to the subjective quality threshold, it is determined whether the rate-distortion optimization parameter value of the $i^{th}$ layer is greater than the distortion threshold. If the rate-distortion optimization parameter value of the $i^{th}$ layer is greater than the distortion threshold, it is determined that $(i+1)^{th}$-layer encoding needs to be performed on the $m^{th}$-frame picture. If the rate-distortion optimization parameter value of the $i^{th}$ layer is less than or equal to the distortion threshold, it is determined whether the encoding quantization parameter value of the $i^{th}$ layer is greater than the quantization threshold. If the encoding quantization parameter value of the $i^{th}$ layer is greater than the quantization threshold, it is determined that $(i+1)^{th}$-layer encoding needs to be performed on the $m^{th}$-frame picture. If the encoding quantization parameter value of the $i^{th}$ layer is less than or equal to the quantization threshold, it is determined whether the peak signal-to-noise ratio of the reconstructed picture of the $i^{th}$ layer is less than the signal-to-noise ratio threshold. If the peak signal-to-noise ratio of the reconstructed picture of the $i^{th}$ layer is less than the signal-to-noise ratio threshold, it is determined that $(i+1)^{th}$-layer encoding needs to be performed on the $m^{th}$-frame picture. If the peak signal-to-noise ratio of the reconstructed picture of the $i^{th}$ layer is greater than or equal to the signal-to-noise ratio threshold, it is determined whether the residual information of the reconstructed picture of the $i^{th}$ layer is greater than the residual threshold. If the residual information of the reconstructed picture of the $i^{th}$ layer is greater than the residual threshold, it is determined that $(i+1)^{th}$-layer encoding needs to be performed on the $m^{th}$-frame picture. If the residual information of the reconstructed picture of the $i^{th}$ layer is less than or equal to the residual threshold, it is determined whether temporal-spatial complexity information of the $m^{th}$-frame picture is greater than a third complexity threshold. If the temporal-spatial complexity information of the $m^{th}$-frame picture is greater than the third complexity threshold, it is determined that $(i+1)^{th}$-layer encoding needs to be performed on the $m^{th}$-frame picture. If the temporal-spatial complexity information of the $m^{th}$-frame picture is less than or equal to the third complexity threshold, it is determined that $(i+1)^{th}$-layer encoding does not need to be performed on the $m^{th}$-frame picture.

In a possible manner, a selective manner may be used to determine whether to perform $(i+1)^{th}$-layer encoding on the $m^{th}$-frame picture.

For example, if a sum of a number of pieces of source information that meets a condition and a number of pieces of encoding information of the $i^{th}$ layer that meets a condition is greater than or equal to a sum of a number of pieces of source information that does not meet a condition and a number of pieces of encoding information of the $i^{th}$ layer that does not meet a condition, it may be determined that $(i+1)^{th}$-layer encoding needs to be performed on the $m^{th}$-frame picture. If a sum of a number of pieces of source information that meets a condition and a number of pieces of encoding information of the $i^{th}$ layer that meets a condition is less than a sum of a number of pieces of source information that does not meet a condition and a number of pieces of encoding information of the $i^{th}$ layer that does not meet a condition, it may be determined that $(i+1)^{th}$-layer encoding does not need to be performed on the $m^{th}$-frame picture.

S308: Write a first preset identifier into a bitstream of an $i^{th}$ layer.

For example, the bitstream of the $i^{th}$ layer is a bitstream obtained by performing $i^{th}$-layer encoding on the $m^{th}$-frame picture.

For example, after completing $i^{th}$-layer encoding on the $m^{th}$-frame picture, the encoding processing module may write an encoding status identifier into the bitstream of the $i^{th}$ layer of the $m^{th}$-frame picture. The encoding status identifier indicates whether the bitstream of the $i^{th}$ layer is a bitstream obtained by performing last-layer encoding on the picture.

For example, the encoding status identifier may include the first preset identifier, and the first preset identifier may indicate that the bitstream is not a bitstream obtained by performing last-layer encoding on a picture corresponding to the bitstream.

For example, the encoding status identifier may include a second preset identifier, and the second preset identifier may indicate that the bitstream is the bitstream obtained by performing last-layer encoding on the picture corresponding to the bitstream.

For example, the first preset identifier is different from the second preset identifier. For example, the first preset identifier is 0, and the second preset identifier is 1.

For example, when determining that $(i+1)^{th}$-layer encoding needs to be performed on the $m^{th}$-frame picture, the scalable decision-making module may send scalable encoding continue notification information to the encoding processing module. After the encoding processing module receives the scalable encoding continue notification information, the first preset identifier may be written into the bitstream of the $i^{th}$ layer.

S309: Add 1 to i.

For example, when determining that $(i+1)^{th}$-layer encoding needs to be performed on the $m^{th}$-frame picture, the scalable decision-making module may add 1 to i, and obtain the encoding parameter of the $i^{th}$ layer. Then, a value of i and the encoding parameter of the $i^{th}$ layer are input to the encoding processing module, and the encoding processing module performs S304.

S310: Write the second preset identifier into the bitstream of the $i^{th}$ layer.

For example, when determining that i is equal to L_MAX, or determining that $(i+1)^{th}$-layer encoding does not need to be performed on the $m^{th}$-frame picture, the scalable decision-making module may send scalable encoding stop notification information to the encoding processing module. The encoding processing module may write the second preset identifier into the bitstream of the $i^{th}$ layer based on the scalable encoding stop notification information.

S311: Add 1 to m.

For example, when the scalable decision-making module determines that i is equal to L_MAX, or after the scalable decision-making module determines that encoding of the $m^{th}$-frame picture ends, the scalable decision-making module may add 1 to m, and then indicate the source analysis module to obtain the $m^{th}$-frame picture, that is, obtain a next frame of picture. Alternatively, the encoding processing module may be indicated to obtain the $m^{th}$-frame picture. Then, scalable encoding may be performed on the next frame of picture according to S301 to S310.

For example, when the scalable decision-making module sends the scalable encoding stop notification information to the encoding processing module, the scalable decision-making module may determine that encoding of the $m^{th}$-frame picture ends. For example, when the scalable decision-making module receives information that is fed back by the encoding processing module and that indicates that the second preset identifier in the bitstream of the $i^{th}$ layer is completed, the scalable decision-making module may determine that the encoding of the $m^{th}$-frame picture ends.

It should be noted that quantities of encoding layers corresponding to different frames may be the same or may be different. Specifically, the quantities need to be determined based on source information of different frames and/or encoding information of encoded layers. This is not limited in embodiments of this application.

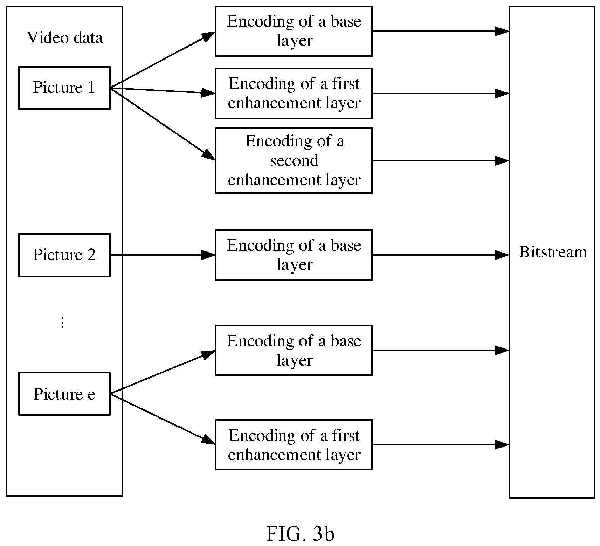

FIG. 3b shows an example of a schematic diagram of a data processing process. Refer to FIG. 3b. For example, video data includes e (e is a positive integer) frames of pictures: a picture 1, a picture 2, a picture 3, ..., and a picture e.

For example, after capturing the picture 1, a picture capturing module may transfer the picture 1 to a source analysis module. In one aspect, the source analysis module may perform complexity analysis on the picture 1, determine complexity of the picture 1, and transfer the complexity of the picture 1 to a scalable decision-making module. In another aspect, the source analysis module may transfer the picture 1 to the scalable decision-making module. The scalable decision-making module may set i to 1, and determine an encoding parameter of a base layer. Then, a value of i, the encoding parameter of the base layer, and the picture 1 are transferred to an encoding processing module. Then, the encoding processing module may perform encoding of the base layer on the picture 1 based on the encoding parameter of the base layer, to obtain a corresponding bitstream. After completing encoding of the base layer on the picture 1, the encoding processing module may determine encoding information of the base layer, and feed back the encoding information of the base layer to the scalable decision-making module.

For example, the scalable decision-making module determines, based on the complexity of the picture 1 and the encoding parameter of the base layer, that encoding of a first enhancement layer needs to be performed on the picture 1, and may send scalable encoding continue notification information to an encoding analysis module. After receiving the scalable encoding continue notification information, the encoding processing module may write a first preset identifier into the bitstream of the base layer. Subsequently, the scalable decision-making module may add 1 to i, determine an encoding parameter of the first enhancement layer, and then send a value of i and the encoding parameter of the first enhancement layer to the encoding processing module. Then, the encoding processing module may perform encoding of the first enhancement layer on the picture 1 based on the encoding parameter of the first enhancement layer, to obtain a corresponding bitstream. After completing encoding of the first enhancement layer on the picture 1, the encoding processing module may determine encoding information of the first enhancement layer, and feed back the encoding information of the first enhancement layer to the scalable decision-making module.

For example, the scalable decision-making module determines, based on the complexity of the picture 1 and the encoding parameter of the first enhancement layer, that encoding of a second enhancement layer needs to be performed on the picture 1, and may send scalable encoding continue notification information to an encoding analysis module. After receiving the scalable encoding continue notification information, the encoding processing module may write a first preset identifier into the bitstream of the first enhancement layer. Subsequently, the scalable decision-making module may add 1 to i, determine an encoding parameter of the second enhancement layer, and send a value of i and the encoding parameter of the second enhancement layer to the encoding processing module. Then, the encoding processing module may perform encoding of the second enhancement layer on the picture 1 based on the encoding parameter of the second enhancement layer, to obtain a corresponding bitstream. After completing encoding of the second enhancement layer on the picture 1, the encoding processing module may determine encoding information of the second enhancement layer, and feed back the encoding information of the second enhancement layer to the scalable decision-making module.

For example, the scalable decision-making module determines, based on the complexity of the picture 1 and the encoding parameter of the second enhancement layer, that encoding of an enhancement layer 3 does not need to be performed on the picture 1, and may send a scalable encoding stop notification message to the encoding processing module. After receiving the scalable encoding stop notification information, the encoding processing module may write a second preset identifier into the bitstream of the second enhancement layer. In this case, encoding performed by a scalable encoding module on the picture 1 ends, that is, the scalable encoding module performs three-layer encoding on the picture 1, as shown in FIG. 3b.

For example, after encoding performed by the scalable encoding module on the picture 1 ends, the scalable encoding module may obtain the picture 2, and perform scalable encoding on the picture 2. For a process of performing scalable encoding on the picture 2, refer to the foregoing process of performing scalable encoding on the picture 1. Details are not described herein again. Refer to FIG. 3b. The scalable encoding module performs encoding of one layer on the picture 2. By analogy, the scalable encoding module may perform scalable encoding on each obtained frame of picture in the manner described above. For example, after encoding performed by the scalable encoding module on the picture (e-1) ends, the scalable encoding module may obtain the picture e, and perform scalable encoding on the picture e. For a process of performing scalable encoding on the picture e, refer to the foregoing process of performing scalable encoding on the picture 1. Details are not described herein again. Refer to FIG. 3b. The scalable encoding module performs encoding of two layers on the picture e.

In this way, flexible scalable encoding can be performed on each picture in a manner of adapting to complexity of the picture and/or encoding information of the picture, and when a to-be-encoded picture changes, layer redundancy caused by excessive layers can be avoided, to improve encoding efficiency and transmission efficiency. In addition, that a transmittable intermediate layer with high picture quality cannot be obtained due to too few layers can be avoided, to improve video picture quality.

The following describes how to write an encoding status identifier into a bitstream.

For example, an encoding status identifier may be written into a header or a tail of a bitstream of an $i^{th}$ layer. For example, the bitstream of the $i^{th}$ layer is shown in Table 1.

**Table 1**

| slice_segment_data() { | Descriptor |
|---|---|
| do { | |
| ... | |
| } while (!end_of_slice_segment_flag) | |
| last_layer_flag | u(1) |
| } | |

For example, Table 1 shows a syntax element of a slice (picture slice) bitstream of the $i^{th}$ layer specified in the standard.

For example, slice_segment_data() may indicate a bitstream of an entire frame obtained by performing $i^{th}$-layer encoding on an $m^{th}$ frame. In this case, do {...}while(!end_of_slice_segment_flag) is used to decode an entire frame of picture corresponding to the $i^{th}$ layer.

For example, slice_segment_data() may indicate a bitstream of a picture slice obtained by performing $i^{th}$-layer encoding on an $m^{th}$ frame. The bitstream obtained by performing $i^{th}$-layer encoding on the $m^{th}$ frame may include bitstreams of a plurality of picture slices. In this case, the do {...}while(!end_of_slice_segment_flag) is used to decode a picture of a picture slice corresponding to the $i^{th}$ layer.

For example, last_layer_flag is a syntax element used to identify whether a bitstream of the $i^{th}$ layer is a bitstream obtained by performing last-layer encoding on an m<sup>th</sup>-frame picture.

For example, when slice_segment_data() indicates a bitstream of a picture slice obtained by performing i<sup>th</sup>-layer encoding on an m<sup>th</sup> frame, last_layer_flag may be written into a bitstream of a last picture slice obtained by performing i<sup>th</sup>-layer encoding on the m<sup>th</sup> frame.

For example, when slice_segment_data() indicates a bitstream of a picture slice obtained by performing i<sup>th</sup>-layer encoding on an m<sup>th</sup> frame, last_layer_flag may be written into a bitstream of each picture slice obtained by performing i<sup>th</sup>-layer encoding on the m<sup>th</sup> frame.

For example, the descriptor describes a representation form of a syntax element. For example, u(1) in Table 1 indicates that last_layer_flag occupies 1 bit. It is assumed that if a first prediction identifier 0 needs to be written into the bitstream of the i<sup>th</sup> layer, "0" may be written into a bit corresponding to last_layer_flag. It is assumed that if a second prediction identifier 1 needs to be written into the bitstream of the i<sup>th</sup> layer, "1" may be written into a bit corresponding to last_layer_flag.

It should be noted that Table 1 shows merely an example of the bitstream. Names of syntax elements in the bitstream, a sequence of the syntax elements, and a quantity of bits occupied by each syntax element are not limited in embodiments of this application.

For example, the encoding processing module may further write L_MAX, and an identifier indicating whether to perform scalable encoding on the picture, into the bitstream. For example, L_MAX, and the identifier indicating whether to perform scalable encoding on the picture may be written into a video parameter set (Video Parameter Set, VPS), a sequence parameter set (Sequence Parameter Set, SPS), or a picture parameter set (Picture Parameter Set, PPS) of the bitstream. The VPS, the SPS, and the PPS may be sent to a decoder side before the encoding processing module sends a bitstream (namely, a picture order bitstream) of a first frame of picture of a video service.

The following uses the SPS as an example for description. For the SPS, refer to Table 2.

**Table 2**

| seq_parameter_set_rbsp() { | Descriptor |
|---|---|
| ... | |
| sps_extension_present_flag | u(1) |
| if( sps_extension_present_ flag ) { | |
| ... | |
| sps_shortrange_multilayer_flag | u(1) |
| } | |
| ... | |
| if( sps_shortrange_multilayer_flag ) { | |
| sps_max_layer_number_minus1 | u(3) |
| } | |
| rbsp_trailing_bits( ) | |
| } | |

For example, Table 2 shows a syntax element of the SPS specified in the standard.

seq_parameter_set_rbsp() indicates an SPS of a bitstream of a video service.

For example, sps_extension_present_flag is a syntax element used to identify whether a syntax element is extended in the SPS. sps_extension_present_flag = 1 indicates that a syntax element is extended in the SPS. sps_extension_present_flag = 0 indicates that a syntax element is not extended in the SPS.

For example, sps_shortrange_multilayer_flag is a syntax element used to identify whether scalable encoding is performed on a picture. sps_shortrange_multilayer_flag = 1 indicates that scalable encoding is performed on the picture. sps_shortrange_multilayer_flag = 0 indicates that scalable encoding is not performed on the picture.

For example, sps_max_layer_number_minus1 is a syntax element used to identify a maximum number of layers L_MAX of the encoding processing module. The encoding processing module may write a difference between the maximum number of layers L_MAX supported by the encoding processing module and 1 into a bit corresponding to sps_max_layer_number_minus1. It is assumed that, as shown in Table 2, a descriptor of sps_max_layer_number_minus1 is u(3), that is, a quantity of bits occupied by sps_max_layer_number_minus1 is 3.

IfL_MAX of the encoding processing module is 8, "111" may be written into the bit corresponding to sps_max_layer_number_minus1. If L_MAX of the encoding processing module is 5, "100" may be written into the bit corresponding to sps_max_layer_number_minus1.

For example, rbsp_trailing_bits() is used to perform byte alignment on the bitstream.

It should be noted that Table 2 shows merely an example of the SPS of the bitstream. Names of syntax elements in the SPS, a sequence of the syntax elements, and a quantity of bits occupied by each syntax element are not limited in embodiments of this application.

For example, before performing each-layer encoding on a picture, the encoding processing module may further write, into a bitstream of the layer, a layer identifier corresponding to the layer. The layer identifier may uniquely identify a layer, for example, a layer number.

For example, the encoding processing module may write, into nal_unit_header() of a bitstream of each layer, a layer identifier of the layer, as shown in Table 3.

**Table 3**

| nal_unit_header( ) { | Descriptor |
|---|---|
| ... | |
| nuh_layer_id | u(3) |
| ... | |
| } | |

For example, Table 3 shows a syntax element of nal_unit_header() specified in the standard.

For example, nuh_layer_id is a syntax element used to identify a coding layer corresponding to a current bitstream. A layer identifier corresponding to the current bitstream may be written into a bit corresponding to nuh_layer_id. The encoding processing module may write a difference between the layer identifier corresponding to the current bitstream and 1 into the bit corresponding to nuh_layer_id. It is assumed that a descriptor of nuh_layer_id in Table 3 is u(3), that is, a quantity of bits occupied by nuh_layer_id is 3. If the current bitstream is a bitstream of a sixth enhancement layer (namely, a bitstream of a seventh layer of the picture), "110" may be written into the bit corresponding to nuh_layer_id. If the current bitstream is a bitstream of a base layer (namely, a bitstream of a first layer of the picture), "000" may be written into the bit corresponding to nuh_layer_id.

It should be noted that Table 3 shows merely an example of the bitstream. Names of syntax elements in the bitstream, a sequence of the syntax elements, and a quantity of bits occupied by each syntax element are not limited in embodiments of this application.

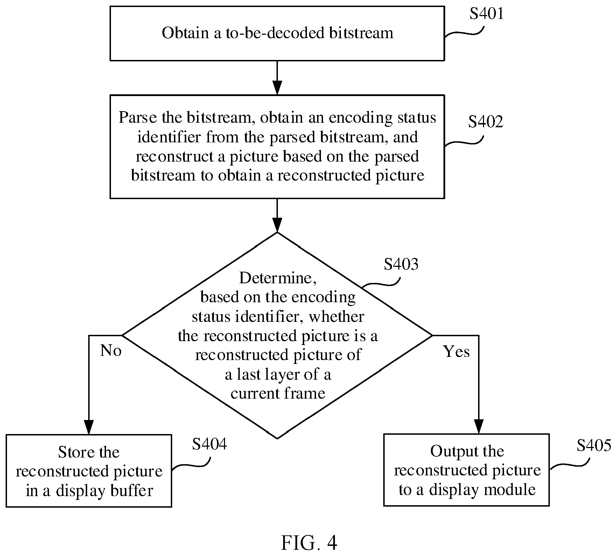

FIG. 4 shows an example of a schematic diagram of decoding. Refer to FIG. 4. For example, a processing process performed by the scalable decoding module after the bitstream is received may be as follows.

S401: Obtain a to-be-decoded bitstream.

For example, after receiving the bitstream, the receiving module of the receiving device may transfer the bitstream to the decoding processing module, and the decoding processing module decodes the bitstream.

S402: Parse the bitstream, obtain an encoding status identifier from the parsed bitstream, and reconstruct a picture based on the parsed bitstream to obtain a reconstructed picture.

For example, the decoding processing module may parse the bitstream, obtain the encoding status identifier from the parsed bitstream, and reconstruct the picture based on the parsed bitstream to obtain the reconstructed picture. Then, the encoding status identifier and the reconstructed picture are sent to the display decision-making module, and the display decision-making module determines whether to send the reconstructed picture to the display module for display.

For example, the bitstream received by the decoding processing module may be shown in Table 1, and the decoding processing module may parse slice_segment_data(). When obtaining do { ... }while(! end_of_slice_segment_flag) in slice_segment_data() through parsing,

the decoding processing module may reconstruct, based on a parsing result for do {...} while(!end_of_slice_segment_flag) in slice_segment_data(),
a picture, to obtain a reconstructed picture. After do {...}while(!end_of_slice_segment_flag) is parsed, an element last_layer_flag can be obtained through parsing. The decoding processing module may determine, based on a value of last_layer_flag obtained through parsing, the encoding status identifier corresponding to the bitstream. For example, last_layer_flag = 1 may be obtained through parsing. In this case, it may be determined that the encoding status identifier is a second preset identifier.

S403: Determine, based on the encoding status identifier, whether the reconstructed picture is a reconstructed picture of a last layer of the current frame.

For example, the reconstructed picture of the last layer of the current frame is a reconstructed picture obtained by decoding a bitstream obtained by performing last-layer encoding on a picture of the current frame.

For example, after receiving the reconstructed picture and the encoding status identifier that are sent by the decoding processing module, the display decision-making module may determine, based on the encoding status identifier, whether the reconstructed picture is the reconstructed picture of the last layer of the current frame, that is, determine, based on the encoding status identifier, whether the decoded bitstream is the bitstream obtained by performing last-layer encoding on the picture.

For example, if the encoding status identifier extracted from the bitstream is a first preset identifier, it may be determined that the reconstructed picture is not the reconstructed picture of the last layer of the current frame. In this case, S404 may be performed. If the encoding status identifier extracted from the bitstream is the second preset identifier, it may be determined that the reconstructed picture is the reconstructed picture of the last layer of the current frame. In this case, S405 may be performed.

For example, Table 1 is parsed to determine that the encoding status identifier is 1, namely, the second preset identifier. Therefore, it may be determined that the reconstructed picture is the reconstructed picture of the last layer of the current frame. In this case, S405 may be performed.

S404: Store the reconstructed picture in a display buffer.

For example, if determining that the reconstructed picture is not the reconstructed picture of the last layer of the current frame, the display decision-making module stores the reconstructed picture in the display buffer.

For example, when a reconstructed picture of a next frame that is sent by the decoding processing module is received, a reconstructed picture of a highest layer of the current frame that is stored in the display buffer may be sent to the display module.

For example, when a signal that is sent by the decoding processing module and that indicates that a bitstream of a next frame is obtained through parsing is received, the reconstructed picture of the highest layer of the current frame that is stored in the display buffer may be sent to the display module.

For example, when receiving a display signal sent by the display module, the display decision-making module may send, to the display module, a reconstructed picture of a highest layer of a latest frame stored in the display buffer.

S405: Output the reconstructed picture to the display module.

For example, if determining that the reconstructed picture is the reconstructed picture of the last layer of the current frame, the display decision-making module may directly send the reconstructed picture to the display module.

It should be noted that the display decision-making module may alternatively determine, based on a layer identifier of the reconstructed picture and L_MAX of the encoding processing module, whether the reconstructed picture is the reconstructed picture of the last layer of the current frame.

For example, when the SPS information received by the decoding processing module is shown in Table 2, the decoding processing module may parse the SPS information, namely, parse seq_parameter_set_rbsp(). When the element sps_extension_present_flag = 1 is obtained through parsing, sps_shortrange_multilayer_flag is further parsed. If sps_shortrange_multilayer_flag = 1 is obtained through parsing, sps_max_layer_number_minus1 is further parsed. If sps_max_layer_number_minus1 = 7 is obtained through parsing, a maximum number of layers L_MAX = sps_max_layer_number_minus1 + 1 = 8 may be obtained through calculating.

For example, when the to-be-decoded bitstream received by the decoding processing module is shown in Table 3, the decoding processing module may parse nal_unit_header(). When the element nuh_layer_id = 3 is obtained through parsing, the layer identifier corresponding to the bitstream = nuh_layer_id + 1 = 4 may be obtained through calculating.

For example, the decoding processing module may send the reconstructed picture, the layer identifier of the reconstructed picture, and L_MAX to the display decision-making module. After the display decision-making module receives the reconstructed picture, the layer identifier of the reconstructed picture, and the L_MAX that are sent to the display decision-making module, if that the layer identifier is not equal to L_MAX is obtained through comparison, the display decision-making module may determine that the reconstructed picture is not the reconstructed picture of the last layer of the current frame. If that the layer identifier is equal to L_MAX is obtained through comparison, the display decision-making module may determine that the reconstructed picture is the reconstructed picture of the last layer of the current frame.

For example, Table 2 and Table 3 are parsed to determine that L_MAX is 8 and the layer identifier is 7. Therefore, it may be determined that the reconstructed picture is not the reconstructed picture of the last layer of the current frame, and S404 may be performed.

In a possible manner, the scalable encoding decision-making of the scalable encoding module may be: before each encoding of a picture, performing decision-making on a number of coding layers for the picture; and encoding the picture based on a number of coding layers of each frame of picture.

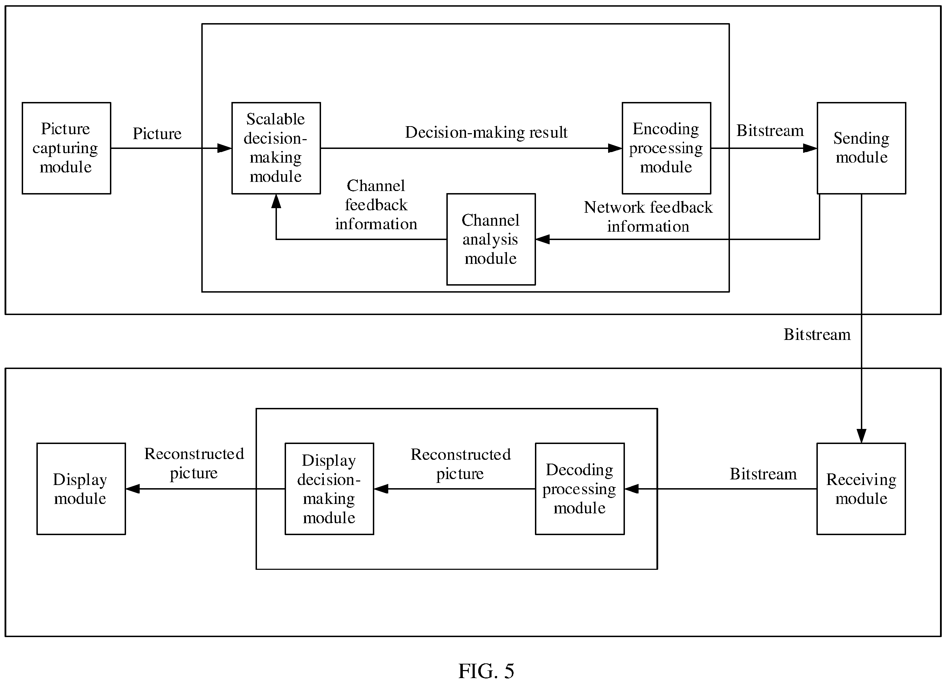

FIG. 5 shows an example of a schematic diagram of data transmission.

Refer to FIG. 5. The scalable encoding module may include a channel analysis module, a scalable decision-making module, and an encoding processing module. It should be understood that FIG. 5 shows merely an example of the scalable encoding module. The scalable encoding module in some other embodiments of this application has more modules than those shown in FIG. 5. This is not limited in embodiments of this application.

For example, the channel analysis module is configured to perform analysis based on network feedback information fed back by the sending module, to determine channel feedback information.

For example, the network feedback information may include at least one of the following: a network transmission bandwidth, a network transmission throughput, a blocked data amount, a packet loss rate, sending delay duration, and a display frame rate.

For example, the network transmission bandwidth represents a transmission capability of a channel during actual sending of data.

For example, the network transmission throughput is an amount of data actually transmitted on a channel in a unit time.

For example, the blocked data amount is an amount of to-be-sent data or a number of to-be-sent frames currently stored in a buffer of the sending device.

For example, the packet loss rate is a ratio of a quantity of lost data packets in a data transmission process to a total quantity of sent data packets.

For example, the sending delay duration is duration from time at which a frame is sent to time at which receiving or discarding is acknowledged.

For example, the display frame rate is a frame rate at which the display module displays the reconstructed picture.

For example, the channel feedback information may include at least one of the following: a network transmission bandwidth estimate, a network transmission throughput estimate, a blocked data amount estimate, a packet loss rate estimate, a sending delay duration estimate, and a display frame rate estimate.

For example, the network transmission bandwidth estimate may be a value obtained by collecting statistics on network transmission bandwidth estimates in a period of time, or may be an instantaneous value of a network transmission bandwidth estimate.

For example, the network transmission throughput estimate may be a value obtained by collecting statistics on network transmission throughputs in a period of time, or may be an instantaneous value of a network transmission throughput.

For example, the blocked data amount estimate may be a value obtained by collecting statistics on blocked data amounts in a period of time, or may be an instantaneous value of a blocked data amount.

For example, the packet loss rate estimate may be a value obtained by collecting statistics on packet loss rates in a period of time, or may be an instantaneous value of a packet loss rate.

For example, the sending delay duration estimate may be a value obtained by collecting statistics on sending delay duration in a period of time, or may be an instantaneous value of sending delay duration.

For example, the display frame rate estimate may be a value obtained by collecting statistics on display frame rates in a period of time, or may be an instantaneous value of a display frame rate.

For example, after determining the channel feedback information, the channel analysis module may transfer the channel feedback information to the scalable decision-making module.

For example, the scalable decision-making module is configured to determine a number of coding layers for each frame of picture based on the channel feedback information. For example, after determining the number of coding layers for each frame of picture, the scalable decision-making module may transfer the number of coding layers to the encoding processing module as a decision-making result.

For example, the encoding processing module is configured to perform encoding. For example, the encoding processing module may encode the picture based on the decision-making result, and then transfer an encoded bitstream to the sending module.

For example, for descriptions of other modules in FIG. 5, refer to the foregoing descriptions. Details are not described herein again.

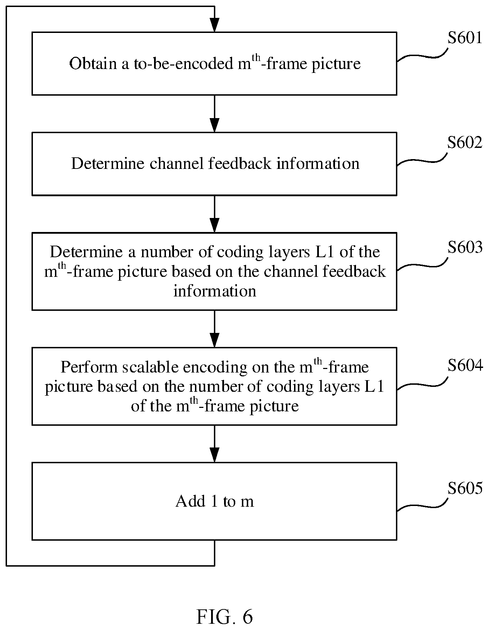

FIG. 6 shows an example of a schematic diagram of an encoding process. Refer to FIG. 6. An $m^{th}$-frame picture (m is a positive integer) is used as an example to describe a process of encoding the $m^{th}$-frame picture by a scalable encoding module. The process may be described as follows.

S601: Obtain the to-be-encoded $m^{th}$-frame picture.

In a possible manner, a picture capturing module may transfer the picture to a scalable decision-making module in the scalable encoding module, and then the scalable decision-making module obtains the to-be-encoded $m^{th}$-frame picture.

In a possible manner, the picture capturing module may simultaneously transfer the picture to the scalable decision-making module and an encoding processing module in the scalable encoding module, and then the scalable decision-making module and the encoding processing module may obtain the to-be-encoded $m^{th}$-frame picture.

**EP 4 380 155 A1**

S602: Determine channel feedback information.

For example, after obtaining the to-be-encoded m<sup>th</sup>-frame picture, the scalable decision-making module may send a channel analysis indication to the channel analysis module, and the channel analysis module performs channel analysis based on network feedback information fed back by the sending module, to obtain the channel feedback information.

For example, the channel feedback information may include historical channel feedback information and current channel feedback information.

For example, the historical channel feedback information may be a statistical value of network feedback information within specified duration before encoding of a (m-1)<sup>th</sup>-frame picture is completed. The specified duration may be set based on a requirement. This is not limited in embodiments of this application. For example, the historical channel feedback information includes at least one of the following: a historical network transmission bandwidth estimate, a historical network transmission throughput estimate, a historical blocked data amount estimate, a historical packet loss rate estimate, a historical sending delay duration estimate, and a historical display frame rate estimate.

For example, the current channel feedback information may be a statistical value of network feedback information in a time period from time at which encoding of the (m-1)<sup>th</sup>-frame picture is completed to time at which the m<sup>th</sup>-frame picture is obtained. For example, the current channel feedback information includes at least one of the following: a current network transmission bandwidth estimate, a current network transmission throughput estimate, a current blocked data amount estimate, a current packet loss rate estimate, a current sending delay duration estimate, and a current display frame rate estimate.

(1) Historical network transmission bandwidth estimate and current network transmission bandwidth estimate

For example, if a network transmission bandwidth at an i<sup>th</sup> (i is a positive integer) moment is $W_i$, and a total throughput of data received and sent on a corresponding channel (namely, a network transmission throughput) is $P_i$, a network transmission bandwidth estimate $W'_i$ at the i<sup>th</sup> moment may be obtained by performing weighted calculation based on the network transmission bandwidth $W_i$ at the i<sup>th</sup> moment and the total throughput $P_i$ of data received and sent on the corresponding channel. For details, refer to the following formula.

$$W'_i = \omega W_i + (1-\omega)\, P_i$$

$\omega$ is a weighting coefficient, and may be set based on a requirement. This is not limited in embodiments of this application.

In a possible manner, the historical network transmission bandwidth estimate may be an average value of network transmission bandwidth estimates at a plurality of moments. For details, refer to the following formula.

$$A1 = \frac{1}{N1} \sum_{i=1}^{N1} W'_i$$

$A1$ is the historical network transmission bandwidth estimate, N1 is a quantity of moments included in specified duration before encoding of a corresponding (m-1)<sup>th</sup>-frame picture is completed, and N1 is a positive integer.

In a possible manner, the historical network transmission bandwidth estimate may be a variance value of network transmission bandwidth estimates at a plurality of moments. For details, refer to the following formula.

$$A1 = \frac{1}{N1} \sum_{i=1}^{N1} \left[ W'_i - \frac{1}{N1} \sum_{i=1}^{N1} W'_i \right]^2$$

In a possible manner, the current network transmission bandwidth estimate may be an average value of network transmission bandwidth estimates at a plurality of moments. For details, refer to the following formula.

$$A2 = \frac{1}{N2} \sum_{i=1}^{N2} W'_i$$

$A2$ is the current network transmission bandwidth estimate, N2 is a quantity of moments included in a time period from time at which encoding of the (m-1)<sup>th</sup>-frame picture is completed to time at which the m<sup>th</sup>-frame picture is obtained, and N2 is a positive integer.

28

In a possible manner, the current network transmission bandwidth estimate may be a variance value of network transmission bandwidth estimates at a plurality of moments. For details, refer to the following formula.

$$A2= \frac{1}{N1+N2} \sum_{i=1}^{N1+N2} \left[ W'_i - \frac{1}{N1+N2} \sum_{i=1}^{N1+N2} W'_i \right]^2$$

(2) Historical network transmission throughput estimate and current network transmission throughput estimate

In a possible manner, the historical network transmission throughput estimate may be an average value of total throughputs of data received and sent on a channel at a plurality of moments. For details, refer to the following formula.

$$B1= \frac{1}{N1} \sum_{i=1}^{N1} P_i$$

$B1$ is the historical network transmission throughput estimate, N1 is a quantity of moments included in specified duration before encoding of a corresponding (m-1)th-frame picture is completed, and N1 is a positive integer.

In a possible manner, the historical network transmission throughput estimate may be a variance value of total throughputs of data received and sent on a channel at a plurality of moments. For details, refer to the following formula.

$$B1= \frac{1}{N1} \sum_{i=1}^{N1} \left[ P_i - \frac{1}{N1} \sum_{i=1}^{N1} P_i \right]^2$$

In a possible manner, the current network transmission throughput estimate may be an average value of total throughputs of data received and sent on a channel at a plurality of moments. For details, refer to the following formula.

$$B2= \frac{1}{N2} \sum_{i=1}^{N2} P_i$$

$B2$ is the current network transmission throughput estimate, N2 is a quantity of moments included in a time period from time at which encoding of the (m-1)th-frame picture is completed to time at which the mth-frame picture is obtained, and N2 is a positive integer.

In a possible manner, the current network transmission throughput estimate may be a variance value of total throughputs of data received and sent on a channel at a plurality of moments. For details, refer to the following formula.

$$B2= \frac{1}{N1+N2} \sum_{i=1}^{N1+N2} \left[ P_i - \frac{1}{N1+N2} \sum_{i=1}^{N1+N2} P_i \right]^2$$

(3) Historical blocked data amount estimate and current blocked data amount estimate

In a possible manner, the historical blocked data amount estimate may be an average value of amounts of to-be-sent data stored in a buffer of the sending device at a plurality of moments. For details, refer to the following formula.

$$C1= \frac{1}{N1} \sum_{i=1}^{N1} L_i$$

$C1$ is the historical blocked data amount estimate, N1 is a quantity of moments included in specified duration before encoding of a corresponding (m-1)th-frame picture is completed, and N1 is a positive integer. $L_i$ is an amount of to-be-sent data stored in the buffer of the sending device at an ith moment.

In a possible manner, the historical blocked data amount estimate may be a variance value of amounts of to-be-sent data stored in a buffer of the sending device at a plurality of moments. For details, refer to the following formula.

$$C1 = \frac{1}{N1} \sum_{i=1}^{N1} \left[ L_i - \frac{1}{N1} \sum_{i=1}^{N1} L_i \right]^2$$

In a possible manner, the current blocked data amount estimate may be an average value of amounts of to-be-sent data stored in a buffer of the sending device at a plurality of moments. For details, refer to the following formula.

$$C2 = \frac{1}{N2} \sum_{i=1}^{N2} L_i$$

$C2$ is the current blocked data amount blocked data amount, N2 is a quantity of moments included in a time period from time at which encoding of the (m-1)<sup>th</sup>-frame picture is completed to time at which the m<sup>th</sup>-frame picture is obtained, and N2 is a positive integer.

In a possible manner, the current blocked data amount estimate may be a variance value of amounts of to-be-sent data stored in a buffer of the sending device at a plurality of moments. For details, refer to the following formula.

$$C2 = \frac{1}{N1+N2} \sum_{i=1}^{N1+N2} \left[ L_i - \frac{1}{N1+N2} \sum_{i=1}^{N1+N2} L_i \right]^2$$

(4) Historical packet loss rate estimate and current packet loss rate estimate

In a possible manner, the historical packet loss rate estimate may be an average value of packet loss rates at a plurality of moments. For details, refer to the following formula.

$$D1 = \frac{1}{N1} \sum_{i=1}^{N1} R_i$$

$D1$ is the historical packet loss rate estimate, N1 is a quantity of moments included in specified duration before encoding of a corresponding (m-1)<sup>th</sup>-frame picture is completed, and N1 is a positive integer. $R_i$ is a packet loss rate at an i<sup>th</sup> moment.

In a possible manner, the historical packet loss rate estimate may be a variance value of packet loss rates at a plurality of moments. For details, refer to the following formula.

$$D1 = \frac{1}{N1} \sum_{i=1}^{N1} \left[ R_i - \frac{1}{N1} \sum_{i=1}^{N1} R_i \right]^2$$

In a possible manner, the current packet loss rate estimate may be an average value of packet loss rates/total throughputs at a plurality of moments. For details, refer to the following formula.

$$D2 = \frac{1}{N2} \sum_{i=1}^{N2} R_i$$

$D2$ is the current packet loss rate estimate, N2 is a quantity of moments included in a time period from time at which encoding of the (m-1)<sup>th</sup>-frame picture is completed to time at which the m<sup>th</sup>-frame picture is obtained, and N2 is a positive integer.

In a possible manner, the current packet loss rate estimate may be a variance value of packet loss rates at a plurality of moments. For details, refer to the following formula.

$$D2 = \frac{1}{N1+N2} \sum_{i=1}^{N1+N2} \left[ R_i - \frac{1}{N1+N2} \sum_{i=1}^{N1+N2} R_i \right]^2$$

(5) Historical sending delay duration estimate and current sending delay duration estimate

In a possible manner, the historical sending delay duration estimate may be an average value of sending delay duration at a plurality of moments. For details, refer to the following formula.

$$E1 = \frac{1}{N1} \sum_{i=1}^{N1} Y_i$$

$E1$ is the historical sending delay duration estimate, N1 is a quantity of moments included in specified duration before encoding of a corresponding (m-1)th-frame picture is completed, and N1 is a positive integer. $Y_i$ is sending delay duration at an ith moment.

In a possible manner, the historical sending delay duration estimate may be a variance value of sending delay duration at a plurality of moments. For details, refer to the following formula.

$$E1 = \frac{1}{N1} \sum_{i=1}^{N1} \left[ Y_i - \frac{1}{N1} \sum_{i=1}^{N1} Y_i \right]^2$$

In a possible manner, the current sending delay duration estimate may be an average value of sending delay duration at a plurality of moments. For details, refer to the following formula.

$$E2 = \frac{1}{N2} \sum_{i=1}^{N2} Y_i$$

$E2$ is the current sending delay duration estimate, N2 is a quantity of moments included in a time period from time at which encoding of the (m-1)th-frame picture is completed to time at which the mth-frame picture is obtained, and N2 is a positive integer.

In a possible manner, the current sending delay duration estimate may be a variance value of sending delay duration at a plurality of moments. For details, refer to the following formula.

$$E2 = \frac{1}{N1+N2} \sum_{i=1}^{N1+N2} \left[ Y_i - \frac{1}{N1+N2} \sum_{i=1}^{N1+N2} Y_i \right]^2$$

(6) Historical display frame rate estimate and current display frame rate estimate

In a possible manner, the historical display frame rate estimate may be an average value of display frame rates at a plurality of moments. For details, refer to the following formula.

$$F1 = \frac{1}{N1} \sum_{i=1}^{N1} f_i$$

$F1$ is the historical display frame rate estimate, N1 is a quantity of moments included in specified duration before encoding of a corresponding (m-1)th-frame picture is completed, and N1 is a positive integer. $f_i$ is a display frame rate at an ith moment.

In a possible manner, the historical display frame rate estimate may be a variance value of display frame rates at a plurality of moments. For details, refer to the following formula.

$$F1= \frac{1}{N1} \sum_{i=1}^{N1} \left[ f_i - \frac{1}{N1} \sum_{i=1}^{N1} f_i \right]^2$$

In a possible manner, the current display frame rate estimate may be an average value of display frame rates at a plurality of moments. For details, refer to the following formula.

$$F2= \frac{1}{N2} \sum_{i=1}^{N2} f_i$$

$F2$ is the current display frame rate estimate, N2 is a quantity of moments included in a time period from time at which encoding of the $(m-1)^{th}$-frame picture is completed to time at which the $m^{th}$-frame picture is obtained, and N2 is a positive integer.

In a possible manner, the current display frame rate estimate may be a variance value of display frame rates at a plurality of moments. For details, refer to the following formula.

$$F2= \frac{1}{N1+N2} \sum_{i=1}^{N1+N2} \left[ f_i - \frac{1}{N1+N2} \sum_{i=1}^{N1+N2} f_i \right]^2$$

It should be noted that, the historical channel feedback information may alternatively be an instantaneous value of network feedback information corresponding to a case in which encoding of the $(m-1)^{th}$-frame picture is completed. For example, the historical network transmission bandwidth estimate is $W'_i=\omega W_i + (1-\omega) P_i$, where i a moment at which encoding of the $(m-1)^{th}$-frame picture is completed. For another example, the historical network transmission throughput estimate is $P_i$, where i is a moment at which encoding of the $(m-1)^{th}$-frame picture is completed. The current channel feedback information may alternatively be an instantaneous value of network feedback information corresponding to a case in which the $m^{th}$-frame picture is obtained. For example, the current network transmission bandwidth estimate is $W'_i=\omega W_i + (1-\omega) P_i$, where i is a moment at which the $m^{th}$-frame picture is obtained. For another example, the current network transmission throughput estimate is P-, where i is a moment at which the $m^{th}$-frame picture is obtained. This is not limited in embodiments of this application.

S603: Determine a number of coding layers L1 of the $m^{th}$-frame picture based on the channel feedback information.

For example, the scalable decision-making module may determine whether the channel feedback information meets a third preset condition. When the channel feedback information meets the third preset condition, L1 is selected from a number of coding layers L2 of a historical frame to a preset maximum number of layers L_MAX; or when the channel feedback information does not meet the third preset condition, L1 is selected from 1 to a number of coding layers L2 of a historical frame.

For example, when both the historical channel feedback information and the current channel feedback information are obtained through calculation based on average values or are instantaneous values, the third preset condition may include at least one of the following:

a difference between the current network transmission bandwidth estimate and the historical network transmission bandwidth estimate is greater than a bandwidth difference threshold;
a difference between the current network transmission throughput estimate and the historical network transmission throughput estimate is greater than a throughput threshold;
a difference between the current blocked data amount estimate and the historical blocked data amount estimate is greater than a data block threshold;
a difference between the current packet loss rate estimate and the historical packet loss rate estimate is greater than a packet loss rate threshold;
a difference between the current sending delay duration estimate and the historical sending delay duration estimate is greater than a delay threshold; and
a difference between the current display frame rate estimate and the historical display frame rate estimate is greater than a display frame rate threshold.

The bandwidth difference threshold, the throughput threshold, the data block threshold, the packet loss rate threshold, the delay threshold, and the display frame rate threshold may all be set based on requirements. Details are not described herein again.

For example, when both the historical channel feedback information and the current channel feedback information are obtained through calculation based on variances, the third preset condition may include at least one of the following:

the current network transmission bandwidth estimate is greater than a bandwidth variance threshold;
the historical network transmission bandwidth estimate is greater than the bandwidth variance threshold;
the current network transmission throughput estimate is greater than a throughput variance threshold;
the historical network transmission throughput estimate is greater than the throughput variance threshold;
the current blocked data amount estimate is greater than a data block variance threshold;
the historical blocked data amount estimate is greater than the data block variance threshold;
the current packet loss rate estimate is greater than a packet loss rate variance threshold;
the historical packet loss rate estimate is greater than the packet loss rate variance threshold;
the current sending delay duration estimate is greater than a delay variance threshold;
the historical sending delay duration estimate is greater than the delay variance threshold;
the current display frame rate estimate is greater than a display frame rate variance threshold; and
the historical display frame rate estimate is greater than the display frame rate variance threshold.

The bandwidth variance threshold, the throughput variance threshold, the data block variance threshold, the packet loss rate variance threshold, the delay variance threshold, and the display frame rate variance threshold may all be set based on requirements. Details are not described herein again.

For example, the scalable decision-making module may randomly select a number from the number of coding layers L2 of the historical frame to the preset maximum number of layers L_MAX as a number of coding layers L1 of an $i^{th}$ layer. The historical frame may be any frame before an $m^{th}$ frame, or may be any frame before an $m^{th}$ frame in a picture group to which the $m^{th}$ frame belongs. This is not limited in embodiments of this application.

For example, L1 may be equal to L2, or may be equal to L_MAX. This is not limited in embodiments of this application.

For example, the scalable decision-making module may alternatively select L1 from the number of coding layers L2 of the historical frame to the preset maximum number of layers L_MAX based on the channel feedback information. For example, if it is determined, based on the channel feedback information, that a network fluctuation is greater (for example, the difference between the current network transmission bandwidth estimate and the historical network transmission bandwidth estimate is much greater than the bandwidth difference threshold), a larger number may be selected as L1 from L2 to L_MAX. For example, if it is determined, based on the channel feedback information, that a network fluctuation is smaller (for example, the difference between the current network transmission bandwidth estimate and the historical network transmission bandwidth estimate is less greater than the bandwidth difference threshold), a smaller number may be selected as L1 from L2 to L_MAX.

For example, the scalable decision-making module may randomly select a number from 1 to the number of coding layers L2 of the historical frame as a number of coding layers L1 of an $i^{th}$ layer.

For example, L1 may be equal to L2, or may be equal to 1. This is not limited in embodiments of this application.

For example, the scalable decision-making module may alternatively select L1 from 1 to the number of coding layers L2 of the historical frame based on the channel feedback information. For example, if it is determined, based on the channel feedback information, that a network fluctuation is smaller (for example, the difference between the current network transmission bandwidth estimate and the historical network transmission bandwidth estimate is more smaller than the bandwidth difference threshold), a smaller number may be selected as L1 from 1 to L2. For example, if it is determined, based on the channel feedback information, that a network fluctuation is greater (for example, the difference between the current network transmission bandwidth estimate and the historical network transmission bandwidth estimate is less smaller than the bandwidth difference threshold), a greater number may be selected as L1 from 1 to L2.

S604: Perform scalable encoding on the $m^{th}$-frame picture based on the number of coding layers L1 of the $m^{th}$-frame picture.

For example, after determining the number of coding layers L1 of the $m^{th}$-frame picture, the scalable decision-making module may further determine an encoding parameter of each of the L1 layers. Then, the number of coding layers L1 of the $m^{th}$-frame picture and the encoding parameter corresponding to each layer are transferred to the encoding processing module. The encoding processing module performs scalable encoding on the $m^{th}$-frame picture based on the number of coding layers L1 of the $m^{th}$-frame picture and the encoding parameter of each layer.

For example, when the encoding processing module does not perform S601, the scalable decision-making module may further transfer the $m^{th}$-frame picture to the encoding processing module. In this case, a sequence in which the scalable decision-making module transfers the number of coding layers L1 of the $m^{th}$-frame picture, the encoding parameter, and the m$^{th}$-frame picture to the encoding processing module is not limited in embodiments of this application.

S605: Add 1 to m.

In a possible manner, after completing encoding of L1 layers on the m$^{th}$-frame picture, the encoding processing module may send a notification message to the scalable decision-making module. In this case, the scalable decision-making module may add 1 to m, and then perform S601, that is, process a next frame of picture.

It should be noted that numbers of coding layers determined by the scalable decision-making module for different frames may be the same or may be different, and may be specifically determined based on the channel feedback information. This is not limited in embodiments of this application

Refer to FIG. 3b. For example, video data includes e (e is a positive integer) frames of pictures: a picture 1, a picture 2, a picture 3, ..., and a picture e.

For example, after capturing the picture 1, the picture capturing module may transfer the picture 1 to the scalable decision-making module. In this case, the scalable decision-making module may send a channel analysis indication to the channel analysis module. Then, the channel analysis module performs channel analysis based on the network feedback information fed back by the sending module, to obtain channel feedback information, and feeds back the channel feedback information to the scalable decision-making module. For example, the scalable decision-making module determines, based on the channel feedback information, that a number of coding layers L1 for the picture 1 is 3. In this case, an encoding parameter of a base layer, an encoding parameter of a first enhancement layer, and an encoding parameter of a second enhancement layer may be determined. Then, a value of the picture 1, L1, and the encoding parameters are input to the encoding analysis module, and the encoding analysis module performs encoding of the base layer on the picture 1 based on the encoding parameter of the base layer, performs encoding of the first enhancement layer on the picture 1 based on the encoding parameter of the first enhancement layer, and performs encoding of the second enhancement layer on the picture 1 based on the encoding parameter of the second enhancement layer.

For example, after receiving the picture 2 and the channel feedback information, the scalable decision-making module may determine that a number of coding layers L1 for the picture 1 is 1. In this case, the scalable decision-making module may determine an encoding parameter of the base layer, and then input the picture 1, a value of L1, and the encoding parameter to the encoding analysis module. The encoding analysis module performs encoding of the base layer on the picture 1 based on the encoding parameters. By analogy, for example, after receiving the picture e and the channel feedback information, the scalable decision-making module may determine that a number of coding layers L1 for the picture e is 2. In this case, the scalable decision-making module may determine an encoding parameter of the base layer and an encoding parameter of the first enhancement layer, and then input the picture e, a value of L1, and the encoding parameters to the encoding analysis module. The encoding analysis module performs encoding of the base layer on the picture e based on the encoding parameter of the base layer, and performs encoding of the first enhancement layer on the picture e based on the encoding parameter of the first enhancement layer.

In this way, flexible scalable encoding can be performed on each picture in a manner of adapting to a network fluctuation situation, and when a network fluctuates, layer redundancy caused by excessive layers is avoided, to improve encoding efficiency and transmission efficiency. In addition, that a transmittable intermediate layer with high picture quality cannot be obtained due to too few layers can be avoided, to improve video picture quality.

For example, a number of coding layers L1 of the m$^{th}$-frame picture may be added to a bitstream of each layer of the m$^{th}$-frame picture.

For example, a number of coding layers L1 of the m$^{th}$-frame picture may be added to a bitstream of a first layer of the m$^{th}$-frame picture.

For example, because a number of coding layers L1 corresponding to each picture is determined before the picture is encoded, the number of coding layers L1 corresponding to each picture may be written into a header of a bitstream of each layer or a bitstream of the first layer. This may be shown in Table 4.

**Table 4**

| slice_segment_header() { | Descriptor |
|---|---|
| ... | |
| reuse_sps_max_layer_number_flag | u(1) |
| If (!reuse_sps_ max_layer_number_flag) { | |
| max_layer_number_minus1 | u(3) |
| } | |
| } | |

For example, Table 4 shows a syntax element of a slice bitstream of the $i^{th}$ layer specified in the standard.

For example, reuse_sps_max_layer_number_flag is a syntax element used to identify whether a number of coding layers L_IMG is set for a picture. reuse_sps_max_layer_number_flag = 0 indicates that the number of coding layers L_IMG is set for the picture. reuse_sps_max_layer_number_flag = 1 indicates that the number of coding layers L_IMG is not set for the picture. In this case, the number of coding layers L_IMG of the picture may be determined based on a value of sps_max_layer_number_minus1 in the SPS. In this case, the number of coding layers L_IMG is L_MAX (maximum number of layers supported by the encoding processing module).

For example, max_layer_number_minus1 is a syntax element used to identify a number of coding layers L_IMG of a picture. For example, that the number of coding layers of the picture L1-1 may be written into a bit corresponding to max_layer_number_minus1. For example, a descriptor corresponding to max_layer_number_minus1 in Table 4 is u(3), it indicates that max_layer_number_minus1 occupies three characters. It is assumed that a number of coding layers L1 of a picture is equal to 4, "011" may be written into the bit corresponding to max_layer_number_minus1. It is assumed that the number of coding layers L1 of the picture is 1, "000" may be written into the bit corresponding to max_layer_number_minus1.

It should be noted that Table 4 shows merely an example of the bitstream. Names of syntax elements in the bitstream, a sequence of the syntax elements, and a quantity of bits occupied by each syntax element are not limited in embodiments of this application.

For example, slice_segment_header() may indicate a bitstream of an entire frame obtained by performing $i^{th}$-layer encoding on an $m^{th}$ frame.

For example, slice_segment_header() may indicate a bitstream of a picture slice obtained by performing $i^{th}$-layer encoding on an $m^{th}$ frame. The bitstream obtained by performing $i^{th}$-layer encoding on the $m^{th}$ frame may include bitstreams of a plurality of picture slices. In a possible manner, reuse_sps_max_layer_number_flag and max_layer_number_minus1 may be written into a bitstream of a first picture slice obtained by performing $i^{th}$-layer encoding on an $m^{th}$ frame. In another possible manner, reuse_sps_max_layer_number_flag and max_layer_number_minus1 may be written into a bitstream of each picture slice obtained by performing $i^{th}$-layer encoding on an $m^{th}$ frame.

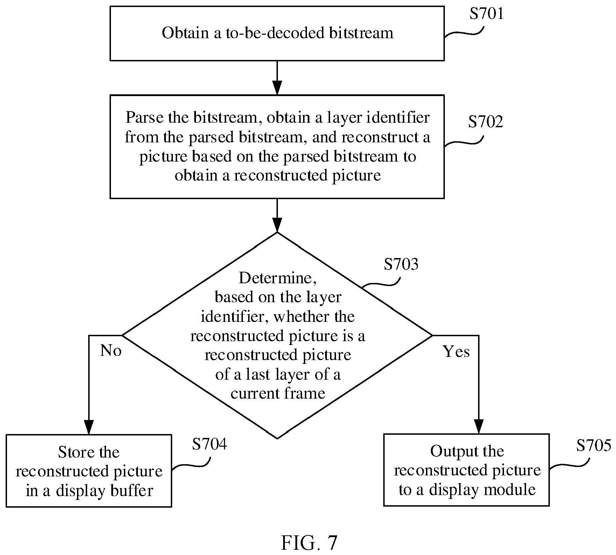

FIG. 7 shows an example of a schematic diagram of a decoding process.

S701: Obtain a to-be-decoded bitstream.

S702: Parse the bitstream, obtain a layer identifier from the parsed bitstream, and reconstruct a picture based on the parsed bitstream to obtain a reconstructed picture.

For example, the decoding processing module may parse the bitstream, obtain the layer identifier and a number of coding layers of a current frame from the parsed bitstream, and reconstruct the picture based on the parsed bitstream to obtain the reconstructed picture. Then, the layer identifier, the number of coding layers of the current frame, and the reconstructed picture are sent to the display decision-making module, and the display decision-making module determines whether to send the reconstructed picture to the display module for display.

For example, for a manner in which the decoding processing module parses SPS information to obtain a maximum number of layers after receiving the SPS information, refer to the foregoing description. Details are not described herein again.

For example, information included in the bitstream received by the decoding processing module may be shown in Table 4, and the decoding processing module may parse slice_segment_header(). When obtaining reuse_sps_max_layer_number_flag = 1 through parsing, the decoding processing module cannot further parse max_layer_number_minus1. In this case, L_MAX obtained through parsing the SPS information may be determined as the number of coding layers L_IMG of the current frame, that is, L_IMG = sps_max_layer_number_minus1 + 1. When obtaining reuse_sps_max_layer_number_flag = 0 through parsing, the decoding module may further parse max_layer_number_minus1. The L_IMG may be determined based on a parsed value of max_layer_number_minus1. L_IMG = max_layer_number_minus1 + 1. For example, if max_layer_number_minus1 = 3 is obtained through parsing, L_IMG = 4 may be determined.

For example, information included in the bitstream received by the decoding processing module may be shown in Table 3, and the decoding processing module may parse nal_unit_header(). If nuh_layer_id = 3 is obtained through parsing, the layer identifier = nuh_layer_id + 1 = 4 may be determined.

S703: Determine, based on the layer identifier, whether the reconstructed picture is a reconstructed picture of a last layer of the current frame.

For example, after the display decision-making module receives the reconstructed picture, the layer identifier of the reconstructed picture, and the number of coding layers L_IMG of the current frame that are sent to the display decision-making module, if that the layer identifier is not equal to L_IMG is obtained through comparison, the display decision-making module may determine that the reconstructed picture is not the reconstructed picture of the last layer of the current frame. If that the layer identifier is equal to L_IMG is obtained through comparison, the display decision-making module may determine that the reconstructed picture is the reconstructed picture of the last layer of the current frame.

For example, Table 4 and Table 3 are parsed to determine that the number of coding layers L_IMG of the current frame is 4, and the layer identifier is 4. Therefore, it may be determined that the reconstructed picture is the reconstructed picture of the last layer of the current frame, and S704 may be performed.

S704: Store the reconstructed picture in a display buffer.

S705: Output the reconstructed picture to the display module.

For example, for S704 and S705, refer to the foregoing descriptions of S404 and S405. Details are not described herein again.

In a possible manner, the scalable encoding decision-making of the scalable encoding module may be: before encoding a picture, determining a number of coding layers for the picture; and after one-layer encoding is performed on the picture based on the determined number of coding layers, performing decision-making on whether to perform next-layer encoding on the picture, and determining whether to perform next-layer encoding on the picture or end encoding of the picture based on a decision-making result.

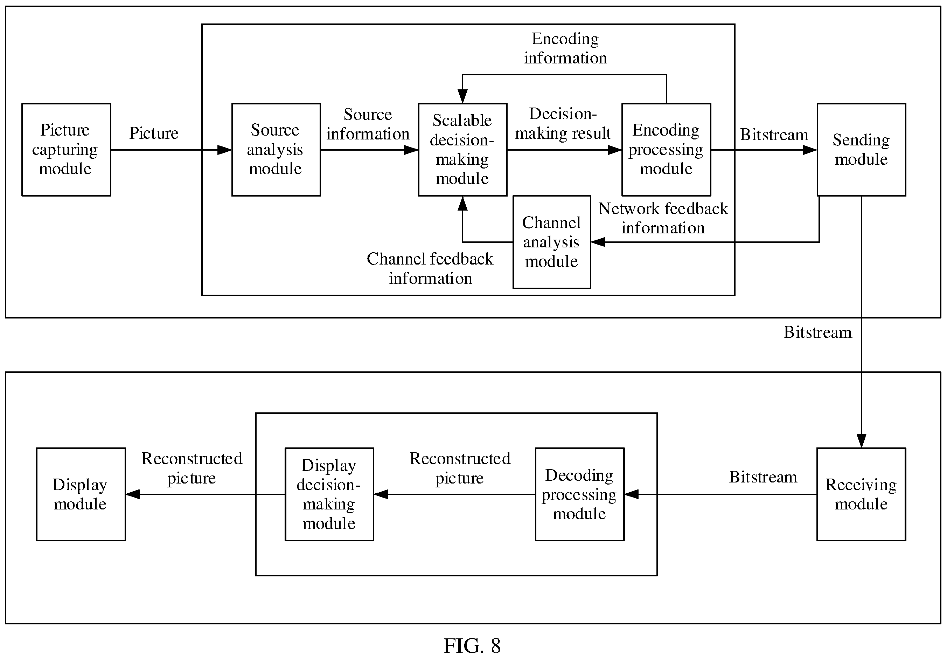

FIG. 8 shows an example of a schematic diagram of data transmission. Refer to FIG. 8. For example, the scalable encoding module may include a source analysis module, a scalable decision-making module, a channel analysis module, and an encoding processing module. It should be understood that FIG. 8 shows merely an example of the scalable encoding module. The scalable encoding module in some other embodiments of this application has more modules than those shown in FIG. 8. This is not limited in embodiments of this application.

For example, for functions and data flow directions of the modules in FIG. 8, refer to the foregoing descriptions. Details are not described herein again.

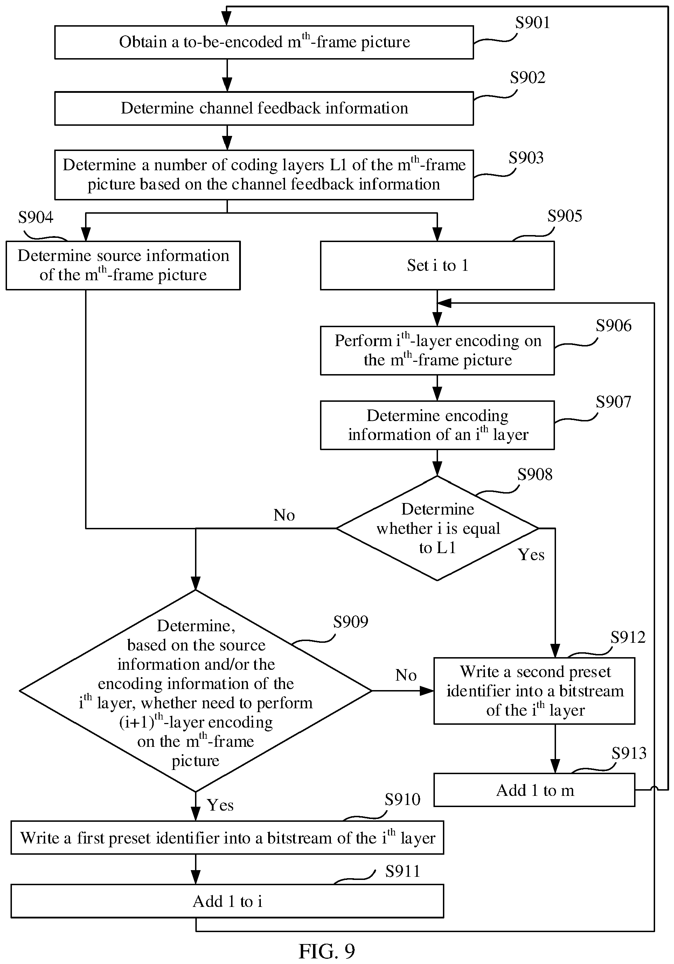

FIG. 9 shows an example of a schematic diagram of an encoding process.

S901: Obtain a to-be-encoded $m^{th}$-frame picture.

S902: Determine channel feedback information.

S903: Determine a number of coding layers L1 of the $m^{th}$-frame picture based on the channel feedback information.

S904: Determine source information of the $m^{th}$-frame picture.

S905: Set i to 1.

S906: Perform $i^{th}$-layer encoding on the $m^{th}$-frame picture.

S907: Determine encoding information of an $i^{th}$ layer.

S908: Determine whether i is equal to L1.

S909: Determine, based on the source information and/or the encoding information of the $i^{th}$ layer, whether need to perform $(i+1)^{th}$-layer encoding on the $m^{th}$-frame picture.

S910: Write a first preset identifier into a bitstream of the $i^{th}$ layer.

S911: Add 1 to i.

S912: Write a second preset identifier into the bitstream of the $i^{th}$ layer.

S913: Add 1 to m.

For example, for S901 to S913, refer to S601 to S603 and S302 to S311. Details are not described herein again.

For example, after encoding is performed according to S901 to S913, for a corresponding decoding method, refer to S401 to S405, and/or S701 to S705. Details are not described herein again.

In this way, flexible scalable encoding can be performed on each picture in a manner of adapting to a network fluctuation situation, and information carried in the picture and/or encoding information of the picture, and when a network fluctuates or a to-be-encoded picture changes, layer redundancy caused by excessive layers is avoided, to improve encoding efficiency and transmission efficiency. In addition, that a transmittable intermediate layer with high picture quality cannot be obtained due to too few layers can be avoided, to improve video picture quality.

In a possible manner, the scalable encoding decision-making of the scalable encoding module may be: first dividing a picture into a plurality of picture blocks, and then determining whether to perform next-layer encoding on each picture block after one-layer encoding is performed on each picture block.

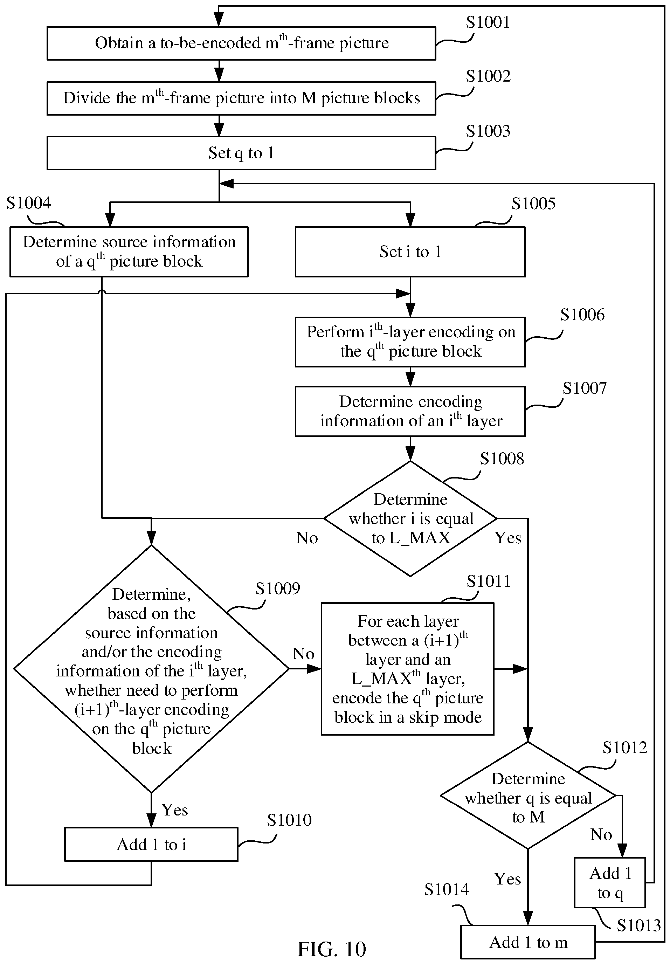

FIG. 10 shows an example of a schematic diagram of an encoding process.

S1001: Obtain a to-be-encoded $m^{th}$-frame picture.

For example, for S1001, refer to S301. Details are not described herein again.

S1002: Divide the $m^{th}$-frame picture into M picture blocks.

For example, M is a positive integer.

For example, the $m^{th}$-frame picture may be divided into the M picture blocks based on a largest coding unit, or the $m^{th}$-frame picture may be divided into the M picture blocks in another manner. This is not limited in embodiments of this application.

The following uses an example in which decision-making is separately performed on whether to perform next-layer encoding on each of the M picture blocks for description.

S1003: Set q to 1.

S1004: Determine source information of a $q^{th}$ picture block.

S1005: Set i to 1.

S1006: Perform $i^{th}$-layer encoding on the $q^{th}$ picture block.

S1007: Determine encoding information of an $i^{th}$ layer.

S1008: Determine whether i is equal to L_MAX.

S1009: Determine, based on the source information and/or the encoding information of the $i^{th}$ layer, whether need to perform $(i+1)^{th}$-layer encoding on the $q^{th}$ picture block.

S1010: Add 1 to i.

For example, for S1004 to S1010, refer to the foregoing descriptions of S302 to S307, and S309. Details are not described herein again.

S1011: For each layer between a $(i+1)^{th}$ layer and an L_MAX$^{th}$ layer, encode the $q^{th}$ picture block in a skip mode.

For example, when there is no need to perform $(i+1)^{th}$-layer encoding on the $q^{th}$ picture block, to ensure that numbers of coding layers of all picture blocks in the $m^{th}$-frame picture are the same, starting from the $(i+1)^{th}$ layer to the L_MAX$^{th}$ layer, the $q^{th}$ picture block of each layer is encoded in the skip mode.

For example, that starting from the $(i+1)^{th}$ layer to the L_MAX$^{th}$ layer, the $q^{th}$ picture block of each layer is encoded in the skip mode may be that when the $q^{th}$ picture block of each layer between the $(i+1)^{th}$ layer and the L_MAX$^{th}$ layer is encoded, a skip identifier is encoded as a bitstream of this layer.

S1012: Determine whether q is equal to M.

For example, when i is equal to L_MAX, or after S1011 is performed, it may be determined whether q is equal to M. When q is equal to M, it indicates that a last picture block of the $m^{th}$-frame picture is encoded. In this case, S1014 may be performed. When q is less than M, it indicates that some picture blocks in the $m^{th}$-frame picture are not encoded. In this case, S1014 may be performed.

S1013: Add 1 to q.

For example, after 1 is added to q, S1004 and S1005 may be performed again, that is, a next picture block in the $m^{th}$-frame picture is encoded.

S1014: Add 1 to m.

For example, after 1 is added to m, S1001 may be performed again, that is, a next frame of picture is encoded.

For example, after scalable encoding is performed on the picture according to S1001 to S1013, each frame of picture is encoded into L_MAX bitstreams, and one bitstream corresponds to bitstreams of same layers of the M picture blocks.

For example, after receiving a to-be-decoded bitstream, a decoding processing module may decode each bitstream to obtain a reconstructed picture of a corresponding layer of a frame of picture. For example, some layers of some picture blocks are encoded in a skip mode. Therefore, in a process of decoding a bitstream by the decoding processing module, if a skip identifier is obtained by decoding a bitstream of each picture block in the bitstream, a predicted picture block obtained by performing current-layer decoding prediction on the picture block may be used as a reconstructed picture block of the picture block. Alternatively, an upper-layer reconstructed picture block corresponding to the picture block may be used as a reconstructed picture block of the picture block.

For example, M = 4, that is, a frame of picture is divided into four picture blocks, and L_MAX = 5. Encoding of five layers is actually performed on a first picture block and a fourth picture block. Encoding of three layers is actually performed on a second picture block, and a fourth layer and a fifth layer are encoded in a skip mode. Encoding of four layers is actually performed on a third picture block, and a fifth layer is encoded in a skip mode. This frame of picture corresponds to four bitstreams. A first bitstream includes first-layer bitstreams corresponding to the four picture blocks, a second bitstream includes second-layer bitstreams corresponding to the four picture blocks, a third bitstream includes third-layer bitstreams corresponding to the four picture blocks, a fourth bitstream includes fourth-layer bitstreams corresponding to the four picture blocks, and a fifth bitstream includes fifth-layer bitstreams corresponding to the four picture blocks.

After receiving the first bitstream, the decoding processing module decodes the first bitstream, to obtain a reconstructed picture of a first layer corresponding to the picture. After receiving the second bitstream, the decoding processing module decodes the second bitstream, to obtain a reconstructed picture of a second layer corresponding to the picture. After receiving the third bitstream, the decoding processing module decodes the third bitstream, to obtain a reconstructed picture of a third layer corresponding to the picture. After receiving the fourth bitstream, the decoding processing module may decode the fourth bitstream. A fourth-layer bitstream of the first picture block is decoded, to obtain a reconstructed picture block of a fourth layer of the first picture block. A fourth-layer bitstream of the second picture block is decoded, to obtain a skip identifier. In this case, a predicted picture block obtained by performing fourth-layer decoding prediction on the second picture block may be used as a reconstructed picture block of a fourth layer of the second picture block (alternatively, a reconstructed picture block of a third layer of the second picture block may be used as a reconstructed picture block of a fourth layer of the second picture block). A fourth-layer bitstream of the third picture block is decoded, to obtain a reconstructed picture block of a fourth layer of the third picture block. A fourth-layer bitstream of the fourth picture block is decoded, to obtain a reconstructed picture block of a fourth layer of the fourth picture block. Further, a reconstructed picture of a fourth layer of the picture may be obtained. After receiving the fifth bitstream, the decoding processing module may decode the fifth bitstream. A fifth-layer bitstream of the first picture block is decoded, to obtain a reconstructed picture block of a fifth layer of the first picture block. A fifth-layer bitstream of the second picture block is decoded, to obtain a skip identifier. In this case, a predicted picture block obtained by performing fifth-layer decoding prediction on the second picture block may be used as a reconstructed picture block of a fifth layer of the second picture block (alternatively, a reconstructed picture block of a fourth layer of the second picture block may be used as a reconstructed picture block of a fifth layer of the second picture block). A fifth-layer bitstream of the third picture block is decoded, to obtain a skip identifier. In this case, a predicted picture block obtained by performing fifth-layer decoding prediction on the third picture block may be used as a reconstructed picture block of a fifth layer of the third picture block (alternatively, a reconstructed picture block of a fourth layer of the third picture block may be used as a reconstructed picture block of a fifth layer of the third picture block). A fifth-layer bitstream of the fourth picture block is decoded, to obtain a reconstructed picture block of a fifth layer of the fourth picture block. Further, a reconstructed picture of a fifth layer of the picture may be obtained.

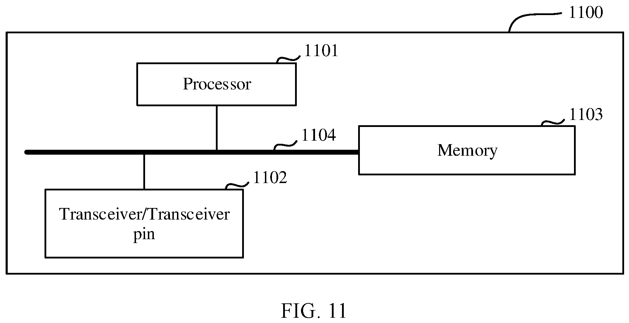

In an example, FIG. 11 is a schematic block diagram of an apparatus 1100 according to an embodiment of this application. The apparatus 1100 may include a processor 1101 and a transceiver/transceiver pin 1102. Optionally, the apparatus 1100 further includes a memory 1103.

Components of the apparatus 1100 are coupled together through a bus 1104. In addition to a data bus, the bus 1104 further includes a power bus, a control bus, and a status signal bus. However, for clear description, various buses are referred to as the bus 1104 in the figure.

Optionally, the memory 1103 may be configured to store instructions for the foregoing method embodiments. The processor 1101 may be configured to execute the instructions in the memory 1103, control a receiving pin to receive a signal, and control a sending pin to send a signal.

The apparatus 1100 may be an electronic device in the foregoing method embodiments or a chip of the electronic device.

All related content of the steps in the foregoing method embodiments may be cited in function descriptions of the corresponding functional modules. Details are not described herein again.

An embodiment further provides a computer storage medium. The computer storage medium stores computer instructions. When the computer instructions are run on an electronic device, the electronic device is enabled to perform the foregoing related method steps, to implement the encoding and decoding methods in the foregoing embodiments.

An embodiment provides a computer program product. When the computer program product runs on a computer, the computer is enabled to perform the foregoing related steps, to implement the encoding and decoding methods in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the encoding and decoding methods in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

Based on descriptions about the foregoing implementations, a person skilled in the art may understand that, for a purpose of convenient and brief description, division into the foregoing functional modules is used as an example for illustration. During actual application, the foregoing functions may be allocated to different functional modules and implemented based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software function unit.

Any content of embodiments of this application and any content of a same embodiment may be freely combined. Any combination of the foregoing content shall fall within the scope of this application.

When being implemented in the form of the software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

Methods or algorithm steps described in combination with the content disclosed in embodiments of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium that can be accessed by a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

**Claims**

1. An encoding method, comprising:

   obtaining a to-be-encoded picture; and
   after $i^{th}$-layer encoding is performed on the picture, performing adaptive scalable encoding on the picture based on source information of the picture and/or encoding information of an $i^{th}$ layer, wherein i is a positive integer, and the $i^{th}$ layer is a base layer or an enhancement layer.

2. The method according to claim 1, wherein the performing adaptive scalable encoding on the picture based on source information of the picture comprises:
   when the source information meets a first preset condition, performing $(i+1)^{th}$-layer encoding on the picture.

3. The method according to claim 1 or 2, wherein the performing adaptive scalable encoding on the picture based on encoding information of an $i^{th}$ layer comprises:
   when the encoding information of the $i^{th}$ layer meets a second preset condition, performing $(i+1)^{th}$-layer encoding on the picture.

4. The method according to claim 1, wherein the performing adaptive scalable encoding on the picture based on source information of the picture and encoding information of an $i^{th}$ layer comprises:
when the source information does not meet a first preset condition, and the encoding information of the $i^{th}$ layer does not meet a second preset condition, ending encoding of the picture.

5. The method according to claim 2 or 4, wherein the first preset condition comprises at least one of the following:

   spatial complexity is greater than a first complexity threshold corresponding to the $i^{th}$ layer;
   temporal complexity is greater than a second complexity threshold corresponding to the $i^{th}$ layer; and
   temporal-spatial complexity is greater than a third complexity threshold corresponding to the $i^{th}$ layer.

6. The method according to claim 5, wherein when i is greater than 1,

   the first complexity threshold corresponding to the $i^{th}$ layer is greater than a first complexity threshold corresponding to a $(i-1)^{th}$ layer;
   the second complexity threshold corresponding to the $i^{th}$ layer is greater than a second complexity threshold corresponding to the $(i-1)^{th}$ layer; and
   the third complexity threshold corresponding to the $i^{th}$ layer is greater than a third complexity threshold corresponding to the $(i-1)^{th}$ layer.

7. The method according to claim 3 or 4, wherein the second preset condition comprises at least one of the following:

   residual information of a reconstructed picture of the $i^{th}$ layer is greater than a residual threshold;
   a peak signal-to-noise ratio of the reconstructed picture of the $i^{th}$ layer is less than a signal-to-noise ratio threshold;
   an encoding quantization parameter value of the $i^{th}$ layer is greater than a quantization threshold;
   a rate-distortion optimization parameter value of the $i^{th}$ layer is greater than a distortion threshold; and
   a subjective quality estimate of the reconstructed picture of the $i^{th}$ layer is less than a subjective quality threshold.

8. The method according to any one of claims 1 to 7, wherein a bitstream obtained by performing $i^{th}$-layer encoding on the picture comprises an encoding status identifier, and the encoding status identifier indicates whether a bitstream of the $i^{th}$ layer is a bitstream obtained by performing last-layer encoding on the picture.

9. The method according to any one of claims 1 to 8, wherein the method further comprises:
after $i^{th}$-layer encoding is performed on the picture, determining, based on a preset maximum number of layers L_MAX, whether to end encoding of the picture.

10. The method according to any one of claims 1 to 9, wherein the encoding information comprises at least one of the following: residual information of a residual picture, a peak signal-to-noise ratio of a reconstructed picture, an encoding quantization parameter value, a rate-distortion optimization parameter value, and a subjective quality estimate of the reconstructed picture.

11. The method according to any one of claims 1 to 10, wherein the source information comprises at least one of the following: spatial complexity, temporal complexity, and temporal-spatial complexity.

12. A decoding method, wherein the method comprises:

   obtaining a to-be-decoded bitstream, wherein the bitstream comprises an encoding status identifier;
   parsing the bitstream, obtaining the encoding status identifier from the parsed bitstream, and reconstructing a picture based on the parsed bitstream to obtain a reconstructed picture; and
   if the encoding status identifier is a first preset identifier, storing the reconstructed picture in a display buffer; or
   if the encoding status identifier is a second preset identifier, outputting the reconstructed picture to a display module.

13. The method according to claim 12, wherein the first preset identifier indicates that the bitstream is not a bitstream obtained by performing last-layer encoding on a picture corresponding to the bitstream, and the second preset identifier indicates that the bitstream is the bitstream obtained by performing last-layer encoding on the picture corresponding to the bitstream.

14. An encoding method, wherein the method comprises:

obtaining a to-be-encoded picture;
determining a number of coding layers L1 of the picture based on channel feedback information, wherein L1 is a positive integer; and
performing scalable encoding on the picture based on the number of coding layers L1.

15. The method according to claim 14, wherein the determining a number of coding layers L1 of the picture based on channel feedback information comprises:

when the channel feedback information meets a third preset condition, selecting L1 from a number of coding layers L2 of a historical frame to a preset maximum number of layers L_MAX; or
when the channel feedback information does not meet a third preset condition, selecting L1 from 1 to a number of coding layers L2 of a historical frame.

16. The method according to claim 15, wherein the third preset condition comprises at least one of the following:

a difference between a current network transmission bandwidth estimate and a historical network transmission bandwidth estimate is greater than a bandwidth difference threshold;
a difference between a current network transmission throughput estimate and a historical network transmission throughput estimate is greater than a throughput threshold;
a difference between a current blocked data amount estimate and a historical blocked data amount estimate is greater than a data block threshold;
a difference between a current packet loss rate estimate and a historical packet loss rate estimate is greater than a packet loss rate threshold;
a difference between a current sending delay duration estimate and a historical sending delay duration estimate is greater than a delay threshold; and
a difference between a current display frame rate estimate and a historical display frame rate estimate is greater than a display frame rate threshold.

17. The method according to any one of claims 14 to 16, wherein the performing scalable encoding on the picture based on the number of coding layers L1 comprises:

after $i^{th}$-layer encoding is performed on the picture, when i is less than the number of coding layers L1, performing adaptive scalable encoding on the picture based on source information of the picture and/or encoding information of an $i^{th}$ layer, wherein i is a positive integer, and the $i^{th}$ layer is a base layer or an enhancement layer; or
when i is equal to the number of coding layers L1, ending encoding of the picture.

18. The method according to any one of claims 14 to 17, wherein the channel feedback information comprises at least one of the following: a network transmission bandwidth estimate, a network transmission throughput estimate, a blocked data amount estimate, a packet loss rate estimate, a sending delay duration estimate, and a display frame rate estimate.

19. The method according to any one of claims 14 to 18, wherein
a bitstream of the picture comprises the number of coding layers L1 of the picture.

20. A decoding method, wherein the method comprises:

obtaining a to-be-decoded bitstream, wherein the bitstream comprises a layer identifier;
parsing the bitstream, obtaining the layer identifier from the parsed bitstream, and reconstructing a picture based on the parsed bitstream to obtain a reconstructed picture; and
when it is determined, based on the layer identifier, that the bitstream is a bitstream obtained by performing last-layer encoding on a picture corresponding to the bitstream, outputting the reconstructed picture to a display module; or
when it is determined, based on the layer identifier, that the bitstream is not a bitstream obtained by performing last-layer encoding on a picture corresponding to the bitstream, storing the reconstructed picture in a display buffer.

21. An encoder, wherein
the encoder is configured to: obtain a to-be-encoded picture; and after $i^{th}$-layer encoding is performed on the picture, perform adaptive scalable encoding on the picture based on source information of the picture and/or encoding information of an $i^{th}$ layer, wherein i is a positive integer, and the $i^{th}$ layer is a base layer or an enhancement layer.

22. The encoder according to claim 21, wherein
the encoder is configured to: when the source information meets a first preset condition, perform $(i+1)^{th}$-layer encoding on the picture.

23. The encoder according to claim 21 or 22, wherein
the encoder is configured to: when the encoding information of the $i^{th}$ layer meets a second preset condition, perform $(i+1)^{th}$-layer encoding on the picture.

24. The encoder according to claim 21, wherein
the encoder is configured to: when the source information does not meet a first preset condition, and the encoding information of the $i^{th}$ layer does not meet a second preset condition, end encoding of the picture.

25. The encoder according to claim 22 or 24, wherein the first preset condition comprises at least one of the following:

spatial complexity information is greater than a first complexity threshold corresponding to the $i^{th}$ layer;
temporal complexity information is greater than a second complexity threshold corresponding to the $i^{th}$ layer; and
temporal-spatial complexity information is greater than a third complexity threshold corresponding to the $i^{th}$ layer.

26. The encoder according to claim 23 or 24, wherein the second preset condition comprises at least one of the following:

residual information of a reconstructed picture of the $i^{th}$ layer is greater than a residual threshold;
a peak signal-to-noise ratio of the reconstructed picture of the $i^{th}$ layer is less than a signal-to-noise ratio threshold;
an encoding quantization parameter value of the $i^{th}$ layer is greater than a quantization threshold;
a rate-distortion optimization parameter value of the $i^{th}$ layer is greater than a distortion threshold; and
a subjective quality estimate of the reconstructed picture of the $i^{th}$ layer is less than a subjective quality threshold.

27. A decoder, wherein
the decoder is configured to: obtain a to-be-decoded bitstream, wherein the bitstream comprises an encoding status identifier; parse the bitstream, obtain the encoding status identifier from the parsed bitstream, and reconstruct a picture based on the parsed bitstream to obtain a reconstructed picture; and if the encoding status identifier is a first preset identifier, store the reconstructed picture in a display buffer; or if the encoding status identifier is a second preset identifier, output the reconstructed picture to a display module.

28. The decoder according to claim 27, wherein
the first preset identifier indicates that the bitstream is not a bitstream obtained by performing last-layer encoding on a picture corresponding to the bitstream, and the second preset identifier indicates that the bitstream is the bitstream obtained by performing last-layer encoding on the picture corresponding to the bitstream.

29. An encoder, wherein
the encoder is configured to: obtain a to-be-encoded picture; determine a number of coding layers L1 of the picture based on channel feedback information, wherein L1 is a positive integer; and perform scalable encoding on the picture based on the number of coding layers L1.

30. The encoder according to claim 29, wherein
the encoder is configured to: when the channel feedback information meets a third preset condition, select L1 from a number of coding layers L2 of a historical frame to a preset maximum number of layers L_MAX; or when the channel feedback information does not meet a third preset condition, select L1 from 1 to a number of coding layers L2 of a historical frame.

31. The encoder according to claim 30, wherein the third preset condition comprises at least one of the following:

a difference between a current network transmission bandwidth estimate and a historical network transmission bandwidth estimate is greater than a bandwidth difference threshold;

a difference between a current network transmission throughput estimate and a historical network transmission throughput estimate is greater than a throughput threshold;

a difference between a current blocked data amount estimate and a historical blocked data amount estimate is greater than a data block threshold;

a difference between a current packet loss rate estimate and a historical packet loss rate estimate is greater than a packet loss rate threshold;

a difference between a current sending delay duration estimate and a historical sending delay duration estimate is greater than a delay threshold; and

a difference between a current display frame rate estimate and a historical display frame rate estimate is greater than a display frame rate threshold.

32. The encoder according to any one of claims 29 to 31, wherein
the encoder is configured to: after $i^{th}$-layer encoding is performed on the picture, when i is less than the number of coding layers L1, perform adaptive scalable encoding on the picture based on source information of the picture and/or encoding information of an $i^{th}$ layer, wherein i is a positive integer, and the $i^{th}$ layer is a base layer or an enhancement layer; or when i is equal to the number of coding layers L1, end encoding of the picture.

33. A decoder, wherein
the decoder is configured to: obtain a to-be-decoded bitstream, wherein the bitstream comprises a layer identifier; parse the bitstream, obtain the layer identifier from the parsed bitstream, and reconstruct a picture based on the parsed bitstream to obtain a reconstructed picture; and when it is determined, based on the layer identifier, that the bitstream is a bitstream obtained by performing last-layer encoding on a picture corresponding to the bitstream, output the reconstructed picture to a display module; or when it is determined, based on the layer identifier, that the bitstream is not a bitstream obtained by performing last-layer encoding on a picture corresponding to the bitstream, store the reconstructed picture in a display buffer.

34. An electronic device, comprising:

a memory and a processor, wherein the memory is coupled to the processor; and
the memory stores program instructions, and when the program instructions are executed by the processor, the electronic device is enabled to perform the method according to any one of claims 1 to 20.

35. A chip, comprising one or more interface circuits and one or more processors, wherein the interface circuit is configured to: receive a signal from a memory of an electronic device, and send the signal to the processor, and the signal comprises computer instructions stored in the memory; and when the processor executes the computer instructions, the electronic device performs the method according to any one of claims 1 to 20.

36. A computer storage medium, wherein the computer-readable storage medium stores a computer program, and when the computer program is run on a computer or a processor, the computer or the processor is enabled to perform the method according to any one of claims 1 to 20.

37. A computer program product, wherein the computer program product comprises a software program, and when the software program is executed by a computer or a processor, steps of the method according to any one of claims 1 to 20 are performed.

FIG. 1

FIG. 2

FIG. 3a

FIG. 3b

FIG. 4

FIG. 5

Obtain a to-be-encoded $m^{th}$-frame picture — S601

Determine channel feedback information — S602

Determine a number of coding layers L1 of the $m^{th}$-frame picture based on the channel feedback information — S603

Perform scalable encoding on the $m^{th}$-frame picture based on the number of coding layers L1 of the $m^{th}$-frame picture — S604

Add 1 to m — S605

FIG. 6

Obtain a to-be-decoded bitstream — S701

Parse the bitstream, obtain a layer identifier from the parsed bitstream, and reconstruct a picture based on the parsed bitstream to obtain a reconstructed picture — S702

Determine, based on the layer identifier, whether the reconstructed picture is a reconstructed picture of a last layer of a current frame — S703

No

Yes

Store the reconstructed picture in a display buffer — S704

Output the reconstructed picture to a display module — S705

FIG. 7

FIG. 8

Obtain a to-be-encoded m<sup>th</sup>-frame picture — S901

Determine channel feedback information — S902

Determine a number of coding layers L1 of the m<sup>th</sup>-frame picture based on the channel feedback information — S903

S904 — Determine source information of the m<sup>th</sup>-frame picture

S905 — Set i to 1

Perform i<sup>th</sup>-layer encoding on the m<sup>th</sup>-frame picture — S906

Determine encoding information of an i<sup>th</sup> layer — S907

S908 — Determine whether i is equal to L1

No

Yes

Determine, based on the source information and/or the encoding information of the i<sup>th</sup> layer, whether need to perform (i+1)<sup>th</sup>-layer encoding on the m<sup>th</sup>-frame picture — S909

No

Write a second preset identifier into a bitstream of the i<sup>th</sup> layer — S912

Add 1 to m — S913

Yes

Write a first preset identifier into a bitstream of the i<sup>th</sup> layer — S910

Add 1 to i — S911

FIG. 9

Obtain a to-be-encoded $m^{th}$-frame picture — S1001

Divide the $m^{th}$-frame picture into M picture blocks — S1002

Set q to 1 — S1003

S1004 — Determine source information of a $q^{th}$ picture block

S1005 — Set i to 1

Perform $i^{th}$-layer encoding on the $q^{th}$ picture block — S1006

Determine encoding information of an $i^{th}$ layer — S1007

S1008 — Determine whether i is equal to L_MAX

No

Yes

S1009 — Determine, based on the source information and/or the encoding information of the $i^{th}$ layer, whether need to perform $(i+1)^{th}$-layer encoding on the $q^{th}$ picture block

No

S1011 — For each layer between a $(i+1)^{th}$ layer and an L_MAX$^{th}$ layer, encode the $q^{th}$ picture block in a skip mode

Yes

Add 1 to i — S1010

S1012 — Determine whether q is equal to M

No

Add 1 to q — S1013

Yes

S1014 — Add 1 to m

FIG. 10

FIG. 11

## INTERNATIONAL SEARCH REPORT

International application No.

**PCT/CN2022/113984**

**A. CLASSIFICATION OF SUBJECT MATTER**

H04N 19/30(2014.01)i; H04N 19/36(2014.01)i

According to International Patent Classification (IPC) or to both national classification and IPC

**B. FIELDS SEARCHED**

Minimum documentation searched (classification system followed by classification symbols)

H04N19/-

Documentation searched other than minimum documentation to the extent that such documents are included in the fields searched

Electronic data base consulted during the international search (name of data base and, where practicable, search terms used)

CNABS; CNTXT; ENTXTC; CNKI: 最后, 层, 低分辨率, 空间复杂度, 参考, 停止, 预设值, 标识, 暂存, 预定值, 高分辨率, 编码, 基础层, 阈值, 时间复杂度, 否, 缓存, 阀值, 是, 显示, 量化, 设定值, 标志, 标旗, 增强层, 重构, 自适应, 编码参数, 不是, 残差, 使能, 是否, 重建, 呈现, 多层, 率失真, 继续, 解码, 时空复杂度, 分层, 信噪比, 停止, 终止, 带宽, 丢包, 阻塞, 帧率, 信道状态, 吞吐量 VEN; ENTXT; JEVT: flag, indicator, mark, label, symbol, last layer, show+, display+, reconstruc+, reference, scalable, cod+, hierarchical, cash, memory, bandwidth, handling capacity, SNR, stop, cease, decod+, residual, quantif +, distortion, frame rate, threshold, value, predeterm+, base layer, enhancement layer, resolution, high, low

**C. DOCUMENTS CONSIDERED TO BE RELEVANT**

| Category* | Citation of document, with indication, where appropriate, of the relevant passages | Relevant to claim No. |
|---|---|---|
| X | CN 1116029 A (SONY CORPORATION) 31 January 1996 (1996-01-31) description, pages 8-17 | 1-7, 9-11, 21-26, 34-37 |
| Y | CN 1116029 A (SONY CORPORATION) 31 January 1996 (1996-01-31) description, pages 8-17 | 17, 32 |
| X | CN 113015003 A (SPREADTRUM COMMUNICATIONS SHANGHAI INC.) 22 June 2021 (2021-06-22) description, paragraphs 25-69 | 12, 27, 34-37 |
| X | CN 109600617 A (KYLAND TECHNOLOGY CO., LTD. et al.) 09 April 2019 (2019-04-09) description, paragraphs 41-181 | 14-16, 18-19, 29-31, 34-37 |
| Y | CN 109600617 A (KYLAND TECHNOLOGY CO., LTD. et al.) 09 April 2019 (2019-04-09) description, paragraphs 41-181 | 17, 32 |
| A | CN 101120591 A (FRANCE TELECOM S.A.) 06 February 2008 (2008-02-06) entire document | 1-37 |

☑ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 November 2022** | **23 November 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/113984** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 106170981 A (HUAWEI TECHNOLOGIES CO., LTD.) 30 November 2016 (2016-11-30) entire document | 1-37 |
| A | CN 105308962 A (SAMSUNG ELECTRONICS CO., LTD.) 03 February 2016 (2016-02-03) entire document | 1-37 |
| A | US 2016073126 A1 (ZHANG WENHAO et al.) 10 March 2016 (2016-03-10) entire document | 1-37 |

Form PCT/ISA/210 (second sheet) (January 2015)

**INTERNATIONAL SEARCH REPORT**

| International application No. |
|---|
| **PCT/CN2022/113984** |

**Box No. III    Observations where unity of invention is lacking (Continuation of item 3 of first sheet)**

This International Searching Authority found multiple inventions in this international application, as follows:

[1]   Independent claims 1 and 21 relate to an encoding method and an encoder; claims 12 and 27 relate to a decoding method and a decoding apparatus; claims 14 and 29 relate to an encoding method and an encoder; claims 20 and 33 relate to a decoding method and a decoding apparatus.

1. ☐   As all required additional search fees were timely paid by the applicant, this international search report covers all searchable claims.

2. ☑   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**      ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet) (January 2015)

**INTERNATIONAL SEARCH REPORT**
Information on patent family members

International application No.

**PCT/CN2022/113984**

| Patent document cited in search report | | | Publication date (day/month/year) | Patent family member(s) | | | Publication date (day/month/year) |
|---|---|---|---|---|---|---|---|
| CN | 1116029 | A | 31 January 1996 | US | 6195464 | B1 | 27 February 2001 |
| | | | | US | 6324304 | B1 | 27 November 2001 |
| | | | | WO | 9507004 | A1 | 09 March 1995 |
| | | | | DE | 69428979 | D1 | 13 December 2001 |
| | | | | US | 6108451 | A | 22 August 2000 |
| | | | | US | 5930394 | A | 27 July 1999 |
| | | | | US | 6539119 | B1 | 25 March 2003 |
| | | | | US | 6219456 | B1 | 17 April 2001 |
| | | | | EP | 0671852 | A1 | 13 September 1995 |
| | | | | JP | H0795568 | A | 07 April 1995 |
| | | | | JP | H0795569 | A | 07 April 1995 |
| | | | | JP | H07107471 | A | 21 April 1995 |
| | | | | JP | H07107474 | A | 21 April 1995 |
| | | | | JP | H07107475 | A | 21 April 1995 |
| | | | | JP | H07123405 | A | 12 May 1995 |
| | | | | JP | H07203437 | A | 04 August 1995 |
| | | | | EP | 0671852 | B1 | 07 November 2001 |
| | | | | CN | 1075321 | C | 27 November 2001 |
| | | | | US | 6408097 | B1 | 18 June 2002 |
| | | | | JP | 3337158 | B2 | 21 October 2002 |
| | | | | JP | 3337159 | B2 | 21 October 2002 |
| | | | | JP | 3337167 | B2 | 21 October 2002 |
| | | | | JP | 3337168 | B2 | 21 October 2002 |
| | | | | JP | 3356337 | B2 | 16 December 2002 |
| | | | | JP | 3356338 | B2 | 16 December 2002 |
| | | | | JP | 3478411 | B2 | 15 December 2003 |
| | | | | KR | 359009 | B1 | 22 November 2005 |
| CN | 113015003 | A | 22 June 2021 | None | | | |
| CN | 109600617 | A | 09 April 2019 | CN | 109600617 | B | 21 July 2020 |
| CN | 101120591 | A | 06 February 2008 | JP | 2008527870 | A | 24 July 2008 |
| | | | | BR | PI0519842 | A2 | 17 March 2009 |
| | | | | PL | 1839442 | T3 | 30 July 2010 |
| | | | | WO | 2006074855 | A1 | 20 July 2006 |
| | | | | US | 2009016434 | A1 | 15 January 2009 |
| | | | | AT | 458355 | T | 15 March 2010 |
| | | | | ES | 2341178 | T3 | 16 June 2010 |
| | | | | EP | 1839442 | A1 | 03 October 2007 |
| | | | | FR | 2880743 | A1 | 14 July 2006 |
| | | | | DE | 602005019473 | D1 | 01 April 2010 |
| | | | | KR | 20070102547 | A | 18 October 2007 |
| | | | | CN | 102065295 | A | 18 May 2011 |
| | | | | IN | 200705319 | P1 | 31 August 2007 |
| | | | | CN | 101120591 | B | 19 January 2011 |
| | | | | CN | 102065295 | B | 26 September 2012 |
| | | | | JP | 5042856 | B2 | 03 October 2012 |
| | | | | US | 8315315 | B2 | 20 November 2012 |
| | | | | KR | 101291555 | B1 | 08 August 2013 |
| | | | | BR | PI0519842 | B1 | 04 December 2018 |
| CN | 106170981 | A | 30 November 2016 | JP | 2018139433 | A | 06 September 2018 |
| | | | | EP | 3107299 | A1 | 21 December 2016 |

Form PCT/ISA/210 (patent family annex) (January 2015)

**INTERNATIONAL SEARCH REPORT**
**Information on patent family members**

International application No.

**PCT/CN2022/113984**

| Patent document cited in search report | | | Publication date (day/month/year) | Patent family member(s) | | | Publication date (day/month/year) |
|---|---|---|---|---|---|---|---|
| | | | | US | 2017006300 | A1 | 05 January 2017 |
| | | | | WO | 2015137237 | A1 | 17 September 2015 |
| | | | | US | 2022286693 | A1 | 08 September 2022 |
| | | | | KR | 20160132089 | A | 16 November 2016 |
| | | | | JP | WO2015137237 | A1 | 06 April 2017 |
| | | | | EP | 3107299 | A4 | 26 April 2014 |
| | | | | JP | 6329246 | B2 | 23 May 2018 |
| | | | | CN | 106170981 | B | 26 February 2019 |
| | | | | JP | 6585223 | B2 | 02 October 2019 |
| | | | | KR | 102073030 | B1 | 04 February 2020 |
| | | | | US | 11356682 | B2 | 07 June 2022 |
| CN | 105308962 | A | 03 February 2016 | EP | 2983364 | A1 | 10 February 2016 |
| | | | | WO | 2014163463 | A1 | 09 October 2014 |
| | | | | KR | 20140122191 | A | 17 October 2014 |
| | | | | US | 2016134879 | A1 | 12 May 2016 |
| | | | | EP | 2983364 | A4 | 07 December 2016 |
| US | 2016073126 | A1 | 10 March 2016 | WO | 2014161355 | A1 | 09 October 2014 |
| | | | | US | 10045041 | B2 | 07 August 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111003279